# EUROPEAN PATENT APPLICATION

(11) **EP 4 741 044 A1**
(43) Date of publication of application: **13.05.2026**
(21) Application number: 24835120.7
(22) Date of filing: 08.05.2024
(51) Int. Cl.: B01D 53/78, B01D 53/58

(54) **NITRILE PRODUCTION METHOD WITH IMPROVED AMMONIA ABSORPTION EFFECT**

(30) Priority: 05.07.2023 CN 202310819780; 05.07.2023 CN 202310819805; 05.07.2023 CN 202310819830; 05.07.2023 CN 202310819832
(71) Applicant: China Petroleum & Chemical Corporation, Beijing 100728 (CN); Sinopec (Shangai) Research Institute of Petrochemical Technology Co., Ltd., Shanghai 201208 (CN)
(72) Inventor: ZHAO, Le, Shanghai 201208 (CN); WU, Lianghua, Shanghai 201208 (CN)
(74) Representative: karo IP
(86) International application number: PCT/CN2024/091569
(87) International publication number: WO 2025/007635

(57) **Abstract**

The present invention relates to a process for producing a nitrile with improved ammonia absorption effect. The process can atomize the spraying liquid, increase the contact area with ammonia, and improve mass transfer efficiency. The process for producing the nitrile comprises a step of subjecting a hydrocarbon feedstock to ammoxidation reaction to produce a reaction product containing nitrile (called as reaction step), and a step of feeding the reaction product into an absorption device through a gas inlet and spraying a spraying liquid onto the reaction product via a spraying device within the absorption device to cool the reaction product and form an absorption atmosphere (called as cooling step), wherein when measured at a vertical distance of 3000 mm above the gas inlet, the absorption atmosphere has an extinction coefficient of 0.004-0.02 m⁻¹.

## Description

The present invention relates to the technical field of gas absorption, and more particularly, to a process for producing nitrile with improved ammonia absorption effect.

### BACKGROUND

In the process route for producing corresponding nitriles by ammoniation or ammoxidation, in order to maximize the conversion of raw material gases such as hydrocarbons, the raw material gas ammonia is generally used in an excess amount, i.e., the molar ratio of ammonia to hydrocarbon raw material gas being greater than 1. For example, in ammoxidation of propylene, the ammonia ratio (molar ratio of ammonia to propylene) is 1.10-1.35, and in ammoxidation of aromatic hydrocarbons, the ammonia ratio (molar ratio of ammonia to aromatic hydrocarbons) is 4-8. Therefore, the reactor outlet tail gas necessarily contains unreacted ammonia. On one hand, as in acrylonitrile production processes, reaction gases such as acrylonitrile are prone to polymerization under alkaline conditions. On the other hand, the escape of even a small amount of unreacted ammonia can easily cause environmental pollution. Therefore, in ammonification or ammoxidation processes, it is desired to use an absorption device (generally called as an ammonia absorption column or quench column) to remove unreacted ammonia from the gas phase using acid or water, which process is very necessary.

With the development of production technology, production loads are continuously increasing, and the trend towards large-scale of devices represents the future development direction. The higher the device load, the larger the equipment, including the absorption device. It is known that in the absorption device, the circulating liquid (spraying liquid) is distributed within the absorption device via a spraying device and contacted countercurrently with the ammonia-containing gas to be absorbed, achieving the purpose of removing residual ammonia from the gas phase.

CN105425849 teaches removal of residual ammonia by adjusting the amount of acid added based on the pH value of the effluent from the absorption device. CN1199940 teaches to improve the mass transfer and heat transfer effect between gas and liquid phases by adding internal components at the bottom of the absorption device, which in fact addresses the issue of uniform distribution of the ammonia-containing gas phase. However, the absorption device is still inevitably subjected to ammonia breakthrough, i.e., a small amount of ammonia escape still existing, leading to product loss in subsequent refining and separation units or causing environmental pollution.

In the ammonia absorption methods of the prior art, after long-term operation of the absorption device, the ammonia content in the absorption tail gas increases significantly compared with the initial period of the operation.

### SUMMARY OF THE INVENTION

In an ammonia absorption column, the spraying liquid is delivered to nozzles by a pump. Due to the high pressure of the spraying liquid, it is fed into the nozzle cavity through a tangential inlet, resulting in a rotating motion. After passing through the specially structured nozzle, the spraying liquid is ejected through the nozzle at high speed, breaking up into numerous small mist droplets. Most of the droplets, influenced by their own gravity and the centrifugal force from the rotating motion, move downward in the column. These droplets contact counter-currently with the upward-flowing gas. At the same time, a very small portion of the droplets may be entrained by the gas and move upward in the column. Inside the column, multiple layers of spraying devices are arranged. Each spraying device contains dozens or even hundreds of nozzles uniformly distributed across the cross-section thereof. During operation of the device, under the influence of the gas flow, the area within the column occupied by the spraying devices is filled with numerous small liquid droplets. Liquid droplets can cause strong attenuation of both visible light and infrared signals. By measuring the extinction coefficient of the droplets inside the column using infrared spectral radiation method or forward scattering method, a comprehensive evaluation of droplet size, quantity, distribution, etc., can be made. Generally, larger droplets and fewer droplets result in less light absorption, higher light transmittance, and a smaller extinction coefficient; *vice versa,* the extinction coefficient is larger.

The inventors of the present invention have found that this problem can be solved by setting the extinction coefficient of the absorption atmosphere within a specific numerical range. The present invention is completed based on this discovery.

Specifically, the present invention relates to the following aspects.
1. A process for producing a nitrile, comprising a step of subjecting a hydrocarbon feedstock to ammoxidation reaction to produce a reaction product containing nitrile (called as reaction step), and a step of feeding the reaction product into an absorption device through a gas inlet and spraying a spraying liquid onto the reaction product via a spraying device within the absorption device to cool the reaction product and form an absorption atmosphere (called as cooling step), wherein when measured at a vertical distance of 3000 mm above the gas inlet, the absorption atmosphere has an extinction coefficient of 0.004-0.02 m⁻¹ (preferably 0.006-0.018 m⁻¹).
2. The producing process according to any preceding or subsequent aspect, wherein when measured at a vertical distance of 3000 mm above the gas inlet, the absorption atmosphere has a droplet average diameter, D₃₂, of 400-2600 µm (preferably 600-2400 µm), and/or, when measured at a vertical distance of 3000 mm above the gas inlet, the absorption atmosphere has a droplet size distribution, D₁₀ of 150-1500 µm, D₅₀ of 700-3000 µm, and D₉₀ of 1400-3600 µm (preferably D₁₀ of 250-1400 µm, D₅₀ of 800-2800 µm, and D₉₀ of 1600-3500 µm).
3. The producing process according to any preceding or subsequent aspect, wherein when measured at a vertical distance of 8500 mm above the gas inlet, the absorption atmosphere has an extinction coefficient of 0.001-0.004 m⁻¹ (preferably 0.0015-0.0035 m⁻¹), and/or, when measured at a vertical distance of 8500 mm above the gas inlet, the absorption atmosphere has a droplet average diameter D₃₂ of 200-1400 µm (preferably 400-1000 µm), and/or, when measured at a vertical distance of 8500 mm above the gas inlet, the absorption atmosphere has a droplet size distribution of D₁₀ of 100-1000 µm, D₅₀ of 300-1800 µm, and D₉₀ of 500-2200 µm (preferably D₁₀ of 200-600 µm, D₅₀ of 400-1400 µm, and D₉₀ of 600-1800 µm).
4. The producing process according to any preceding or subsequent aspect, wherein the spraying device comprises a spraying liquid inlet, a first spraying pipe in fluid communication with the spraying liquid inlet, a plurality (e.g., 10-26, preferably 12-22) of second spraying pipes in fluid communication with the first spraying pipe and extending perpendicularly to the first spraying pipe along both sides thereof, a plurality (e.g., 4-26, preferably 6-22) of third spraying pipes in fluid communication with the second spraying pipes and extending perpendicularly to the second spraying pipes along both sides thereof, and nozzles located at the ends of the third spraying pipes and in fluid communication therewith.
5. The producing process according to any preceding or subsequent aspect, wherein, on two adjacent second spraying pipes, the linear distance, M, between the end of any one third spraying pipe on one second spraying pipe and the end of any one third spraying pipe on another adjacent second spraying pipe is not less than 320 mm (preferably not less than 350 mm), and/or, the nozzle is same as or different from each other and each independently have a spraying liquid ejection rate of 0.5-7.5 t/h (preferably 0.9-6.5 t/h), and/or, the nozzle is same as or different from each other and each independently have a spraying liquid ejection pressure at the nozzle outlet of 0.03-0.85 MPaG (preferably 0.04-0.65 MPaG), and/or, the spraying liquid input pressure at the spraying liquid inlet is controlled to be 0.06-1.00 MPaG (preferably 0.12-0.90 MPaG, more preferably 0.18-0.80 MPaG), and/or, the difference (absolute value) in the spraying liquid input pressures at the spraying liquid inlets of any two spraying devices is less than 0.024 MPa (preferably less than 0.018 MPa, more preferably less than 0.012 MPa).
6. The producing process according to any preceding or subsequent aspect, wherein a plurality (e.g., 2-10, preferably 4-8) of the spraying devices are arranged in layers inside the absorption device along the central axis direction of the absorption device with a predetermined vertical spacing, and/or, the vertical spacing between two adjacent spraying devices (calculated as the vertical spacing of the spraying liquid inlets of the spraying devices) is 650-1350 mm (preferably 750-1200 mm).
7. The producing process according to any preceding or subsequent aspect, wherein when a cross-section is obtained by cutting the absorption device at a direction perpendicular to the central axis of the absorption device, at least one (preferably all) selected from the first spraying pipe, the second spraying pipe, and the third spraying pipe of one of the plurality of spraying devices and at least one (preferably all) selected from the first spraying pipe, the second spraying pipe, and the third spraying pipe of another of the plurality of spraying devices substantially coincide in the projection on the cross-section.
8. The producing process according to any preceding or subsequent aspect, wherein all nozzles of the one spraying device and all nozzles of the any other spraying device substantially coincide in the projection on the cross-section, and/or, two nozzles with substantially coinciding projections have the same spray diameter, and/or, two nozzles with substantially coinciding projections have the same spraying liquid rotating direction.
9. The producing process according to any preceding or subsequent aspect, wherein the vertical distance between the gas inlet and the spraying liquid inlet of the spraying device (when more than one spraying device are present, referring to the spraying device closest to the gas inlet) is 800-6000 mm (preferably 1000-5000 mm), and/or, the gas inlet has an inner diameter of 800-1900 mm (preferably 900-1700 mm), and/or, the reaction product has a linear velocity within the absorption device of 0.6-1.5 m/s (preferably 0.7-1.3 m/s), and/or, the flow ratio by weight of the spraying liquid to the reaction product is 15-25:1.
10. The producing process according to any preceding or subsequent aspect, wherein within the internal space of the absorption device between the gas inlet and the spraying device (when more than one spraying device are present, referring to the spraying device closest to the gas inlet), no mechanical member capable of substantially affecting the gas flow is arranged.
11. The producing process according to any preceding or subsequent aspect, wherein the angle between projection of the spraying liquid inlets of the one spraying device and that of the any other spraying device on the cross-section is 180°.
12. The absorption device according to any preceding or subsequent aspect, wherein among all the spraying devices, the angle between the projections on the cross-section of the spraying liquid inlets of any two odd-numbered spraying devices is 0°, the angle between the projections on the cross-section of the spraying liquid inlets of any two even-numbered spraying devices is 0°, and the angle between the projections on the cross-section of the spraying liquid inlet of any odd-numbered spraying device and of the spraying liquid inlet of any even-numbered spraying device is 180°.
13. The absorption device according to any preceding or subsequent aspect, wherein the nozzle comprises a nozzle inlet, a rotating chamber, and a nozzle outlet, wherein the rotating chamber is configured such that the spraying liquid fed in through the nozzle inlet leaves the nozzle outlet in a rotating manner after passing through the rotating chamber.
14. The absorption device according to any preceding or subsequent aspect, wherein on at least one (preferably all) of the second spraying pipes, two adjacent (preferably all) nozzles located on the same side of the second spraying pipe are configured such that the spraying liquid is ejected out with the same rotating direction.
15. The absorption device according to any preceding or subsequent aspect, wherein all nozzles toward the facing sides of two side-by-side adjacent second spraying pipes are configured such that the spraying liquid is ejected out with opposite rotating directions.
16. The absorption device according to any preceding or subsequent aspect, wherein on at least one (preferably all) of the second spraying pipes, at least one (preferably all) nozzle located on one side of the second spraying pipe is configured such that the spraying liquid is ejected out with a rotating direction A, while at least one (preferably all) nozzle located on the opposite side of the second spraying pipe is configured such that the spraying liquid is ejected out with a rotating direction B, wherein the rotating direction A is opposite to the rotating direction B.
17. The absorption device according to any preceding or subsequent aspect, wherein among all the nozzles of the spraying device, the number of nozzles ejecting the spraying liquid with the rotating direction A is equal or substantially equal to the number of nozzles ejecting the spraying liquid with the rotating direction B.
18. The producing process according to any preceding or subsequent aspect, wherein the plurality of second spraying pipes extend perpendicularly to the first spraying pipe toward its opposite sides substantially parallel in the horizontal direction, and/or, the plurality of third spraying pipes extend perpendicularly to the second spraying pipes toward their opposite sides substantially parallel in the horizontal direction.
19. The producing process according to any preceding or subsequent aspect, wherein the first spraying pipe has an inner diameter of 160-480 mm (preferably 200-450 mm) and a length of 4500-11500 mm (preferably 4800-10500 mm), and/or, the plurality of second spraying pipes are same as or different from each other, each independently having an inner diameter of 30-150 mm (preferably 40-120 mm) and each independently having a length of 1200-5750 mm (preferably 1800-5250 mm), and/or, the plurality of third spraying pipes are same as or different from each other, each independently having an inner diameter of 10-60 mm (preferably 15-50 mm) and each independently having a length of 160-325 mm (preferably 175-300 mm).
20. The producing process according to any preceding or subsequent aspect, wherein the nozzle is same as or different from each other, each independently having an inner diameter (referring to the nozzle outlet) of 3-20 mm (preferably 6-14 mm), a rotating chamber diameter of 10.0-55.0 mm (preferably 13.0-45.0 mm), and a spray angle of 65-120° (preferably 70-100° ).
21. The producing process according to any preceding or subsequent aspect, wherein on the first spraying pipe, the horizontal spacing between two adjacent second spraying pipes is 640-1300 mm (preferably 700-1200 mm), and/or, on a same second spraying pipe, the horizontal spacing between two adjacent third spraying pipes is 320-650 mm (preferably 350-600 mm),
22. The producing process according to any preceding or subsequent aspect, wherein in the cooling step, the spraying liquid and the reaction product are contacted in a countercurrent manner.
23. The producing process according to any preceding or subsequent aspect, wherein the absorption device has an inner diameter of 4.5-11.5 m (preferably 4.8-10.5 m).
24. The producing process according to any preceding or subsequent aspect, wherein the gas inlet is located below the spraying device along the central axis direction of the absorption device.
25. The producing process according to any preceding or subsequent aspect, wherein in the reaction step, the hydrocarbon raw material is propylene, and the molar ratio of propylene/ammonia/air (calculated as molecular oxygen) is 1:1.1-1.3:1.8-2.0, and the reaction comprises a temperature of 420-440°C, a reaction pressure (gauge pressure) of 0.03-0.14 MPa, and a catalyst weight hourly space velocity of 0.06-0.15 h⁻¹, or alternatively, the hydrocarbon raw material is isobutylene, and the molar ratio of isobutylene/ammonia/air (calculated as molecular oxygen) is 1:1.3-1.6:2.2-2.8, and the reaction comprises a temperature of 395-420°C, a reaction pressure (gauge pressure) of 0.03-0.14 MPa, and a catalyst weight hourly space velocity of 0.08-0.17 h⁻¹.
26. The producing process according to any preceding or subsequent aspect, wherein in the cooling step, the spraying liquid cools the reaction product from a temperature of 195-235°C to 81-86°C, and/or, in the cooling step, the spraying liquid reduces the ammonia content of the reaction product to 150 ppm or less.
27. The absorption device according to any preceding or subsequent aspect, wherein the rotating direction A is clockwise, and the rotating direction B is counterclockwise.

### TECHNICAL EFFECTS

According to the present invention, even after long-term operation (e.g., continuous operation for 18 months or longer), the ammonia content in the absorption tail gas does not increase significantly compared with the initial period of the operation, and good ammonia absorption effect can be maintained for a long period, reducing ammonia escape.

According to the present invention, even after long-term operation (e.g., continuous operation for 18 months or even longer), the total acid consumption can still be maintained at a low level, with a small increase (e.g., less than 3%).

According to the present invention, ammonia gas is uniformly distributed in the absorption column, which is beneficial for ammonia absorption.

According to the present invention, gas-liquid contact is sufficient, the ammonia absorption effect is excellent, and the amount of acid used can be reduced.

### BRIEF DESCRIPTION OF THE DRAWINGS

Fig.1 is a schematic front view of an ammonia absorption column of the prior art.
Fig.2 is a schematic front view of an ammonia absorption column of the prior art.
Figs.3a and 3b are schematic front views of an ammonia absorption column of the present invention.
Figs.4A and 4B are schematic front views of an ammonia absorption column of the present invention.
Fig.5 is a schematic top view of a spraying device of the present invention.
Figs.6A and 6B are schematic top views of a spraying device of the present invention.
Fig.7 is a schematic top view of a spraying device of the present invention.
Figs.8A and 8B are schematic top views of comparative spraying devices.
Figs.9A and 9B are schematic top and front views of a nozzle of the prior art.
Figs.10A and 10B are a schematic top view and a detailed top view of a spraying device of the prior art.
Fig.11A is a schematic top/front view showing two rotation modes of a nozzle of the present invention.
Fig.11B is a schematic top view of a spraying device.
Fig.11C is a detailed view of a schematic top view of one spraying device of the present invention.
Fig.11D is a detailed view of a schematic top view of any other spraying device of the present invention.
Fig.11E is a detailed view of a schematic top view of any other spraying device of the present invention.

### Illustration of reference signs::

1: Ammonia absorption column
2: An internal component, demister, of ammonia absorption column
3: An internal component, spraying device, of ammonia absorption column, 3a-3f beingspraying devices
4: An internal component, gas distributor, of ammonia absorption column
5: An internal component, spraying device, of ammonia absorption column, 5a-5b being spraying devices
6: Upper section circulation pump
7: Lower section circulation pump
8: Ammonia-containing gas feed
9: Gas phase output of ammonia absorption column
10: Upper section water supplement
11: Lower section wastewater output
12: Upper section ammonium salt-containing solution output
13: Lower section circulating liquid
14: Upper section circulating liquid
15: Acid-containing solution
16: Circulating liquid
17: Circulation pump
18: Spraying device inlet
19: First spraying pipe of spraying device
20a, 20b: Second spraying pipes of spraying device
21: Third spraying pipe of spraying device
22: Atomizing nozzle of spraying device
23: Gas distributor
P1, P2, P3, P4, P5, P6: Inlet pressure of spraying liquid of spraying device.

### EMBODIMENTS

The specific embodiments of the present invention will be described in detail below, but it should be pointed out that the protection scope of the present invention is not limited by these specific embodiments, but is determined by the claims attached.

All publications, patent applications, patents, and other references mentioned in this specification are herein incorporated by reference in their entirety. Unless defined otherwise, all technical and scientific terms used herein are understood same as the meanings commonly known to those skilled in the art. In case of conflict, definitions according to the present specification will control.

When the specification introduces materials, substances, processes, steps, devices, components, or the like initiated with "known to those with ordinary skill in the art", "prior art", or the like, it is intended that the subject matter so initiated encompass not only those conventionally used in the art at the time of filing this application, but also those may not be so commonly used at the present time, but will become known in the art as being suitable for a similar purpose.

In the context of this specification, "substantially" means a deviation of not more than 10%, preferably no more than 5% or 2%.

In the context of this specification, the measurement method for the extinction coefficient is forward near-infrared scattering spectroscopy. In the strong radiation region of the visible light range, a near-infrared LED light source is used to irradiate a sampling volume of about 100 ml, and the scattered light intensity, I(θ), within the forward 25°-45° range is measured, from which the extinction coefficient, σ, is calculated, with a calculation formula of σ = I(θ)/k, where k is the scattering extinction ratio, which can be calibrated by a high-precision transmissometer.

In the context of this specification, the measurement method for the droplet average diameter, D₃₂, is based on laser imaging for measuring planar droplet size. The 2D spatially resolved Sauter mean diameter D₃₂ is obtained from mist droplet image information. Planar global droplet size measurement requires simultaneous recording of laser-induced fluorescence (LIF) signals and Mie scattering (MIE) signal images of the measured droplet object. The two-dimensional Sauter mean diameter is calculated from the ratio of these two image signals. The LIF image represents the droplet volume, and the MIE light is essentially proportional to the total droplet volume.

D₃₂ = total droplet volume / total droplet surface area = LIF signal / MIE signal.

In the context of this specification, the measurement method for the droplet size distribution is the same as the measurement method for the droplet average diameter D₃₂, based on laser imaging for measuring droplet size distribution. The 2D spatially resolved particle size distributions such as D₁₀, D₅₀, and D₉₀ are obtained from mist droplet image information.

All percentages, parts, ratios, and the like referred to in the specification are based on weight and pressures are gauge pressures unless explicitly indicated.

In the context of the present invention, any two or more embodiments or aspects of the present invention may be arbitrarily combined, and the technical solutions resulted are part of the original disclosure of the present specification, and also fall within the scope of the present invention.

In the context of this specification, all technical details not mentioned, etc., directly apply the relevant information known in the art.

According to one embodiment of the present invention, a process for producing a nitrile, particularly (meth)acrylonitrile, is involved.

According to one embodiment of the present invention, the process for producing the nitrile comprises a step of subjecting a hydrocarbon feedstock to ammoxidation reaction to produce a reaction product containing nitrile (called as reaction step), and a step of feeding the reaction product into an absorption device through a gas inlet and spraying a spraying liquid onto the reaction product via a spraying device within the absorption device to cool the reaction product and form an absorption atmosphere (called as cooling step). In the art, the absorption device is also generally called as an ammonia absorption column or a quench column.

According to the present invention, when measured at a vertical distance of 3000 mm above the gas inlet, the absorption atmosphere has an extinction coefficient of 0.004-0.02 m⁻¹ (preferably 0.006-0.018 m⁻¹). The inventors of the present invention have found that as liquid droplets cause strong attenuation of both visible light and infrared signals, measuring the attenuation of light and calculating the extinction coefficient thereof can be used to comprehensively evaluate the dispersion effect after the liquid is ejected at high speed through the nozzle. For a given amount of liquid broken up into several small droplets by the nozzle, generally, larger droplet size and relatively fewer quantity of droplets result in less light absorption, higher light transmittance, and a smaller extinction coefficient; conversely, it is larger. A small extinction coefficient means large droplet size and few droplets, resulting in a relatively small total droplet surface area. Due to insufficient contact area with gaseous ammonia, the ammonia absorption efficiency decreases, causing more ammonia breakthrough. Conversely, a large extinction coefficient means small droplet size and a great number of droplets; while these overly small droplets are entrained upward by the gas and easily carried out of the column. Within the ammonia absorption column, ammonium salts contained in the droplets are carried by the gas into subsequent procedures, increasing the environmental burden, which should be avoided as much as possible.

According to a preferred embodiment of the present invention, when measured at a vertical distance of 3000 mm above the gas inlet, the absorption atmosphere has a droplet average diameter D₃₂ of 400-2600 µm (preferably 600-2400 µm). The inventors of the present invention have found that at the moment the liquid is being ejected out from the nozzle, the liquid film is torn into small droplets. During the descending process, when small droplets collide with other droplets, phenomena such as separation, coalescence, and breakage occur. The average droplet size can be measured by optical methods. When the average droplet size is greater than 2600 µm, on one hand, due to gravity, the descending velocity of the droplets is faster, significantly shortening their residence time in the column, which easily leads to decreased absorption efficiency due to insufficient contact time with the gas. On the other hand, for two droplets with the same volume, the surface area of one large droplet is smaller than the combined surface area of two small droplets formed by splitting. That is, compared to two small droplets, one large droplet has less opportunity to contact the gas, also leading to reduced absorption efficiency. When the average droplet size is less than 400 µm, as the upward lifting force by the gas on the droplets overcomes the droplets' own gravity, the droplets are more easily entrained. At the same time, more power, such as the inlet pressure of the spraying device, is required to tear the liquid into smaller sizes when it is ejected through the nozzle.

According to a preferred embodiment of the present invention, when measured at a vertical distance of 3000 mm above the gas inlet, the absorption atmosphere has a droplet size distribution of D₁₀ of 150-1500 µm, D₅₀ of 700-3000 µm, and D₉₀ of 1400-3600 µm (preferably D₁₀ of 250-1400 µm, D₅₀ of 800-2800 µm, and D₉₀ of 1600-3500 µm). The inventors of the present invention have found that after the liquid is ejected out from the nozzle, it is torn into numerous small droplets of different sizes. Simultaneously, during collisions between two droplets, the particle size may increase due to coalescence, decrease due to breakage, or remain unchanged due to separation. In specific embodiments, the circulating liquid is an acid-containing liquid, and the absorption atmosphere is an ammonia-containing gas. The acid in the droplets absorbs ammonia from the gas phase to form ammonium salts present in the droplets. If the D₁₀ and/or D₅₀ and/or D₉₀ of the droplets are small, it also means the D₃₂ of the droplets is small, such that droplets containing ammonium salts are easily entrained by the gas and escape the column, bringing new problems to subsequent process treatment. For example, if the circulating liquid contains sulfuric acid, SO2-containing gas is generated during wastewater incineration; while if the circulating liquid contains phosphoric acid, P2O5 is generated. These are unfriendly to the environment and should be avoided as much as possible.

According to a further preferred embodiment of the present invention, when measured at a vertical distance of 8500 mm above the gas inlet, the absorption atmosphere has an extinction coefficient of 0.001-0.004 m⁻¹ (preferably 0.0015-0.0035 m⁻¹). The inventors of the present invention have found that the measurement position is above the spraying device of the absorption column, where the droplets in this region are caused by gas entrainment. Compared to the droplet size at the aforementioned measurement positions, the droplet size in this region is relatively smaller, and the amount of gas entrainment is also within a controllable range. When the extinction coefficient of the absorption atmosphere is less than 0.001 m⁻¹, it indicates that the droplet size in the spraying device region is relatively large, and the upward thrust from the gas on the droplets is less than their gravity, resulting in a relatively small amount of droplet entrainment. However, large droplet size in the spraying device region leads to insufficient gas-liquid contact, easily causing breakthrough of the absorption atmosphere (e.g., ammonia). When the extinction coefficient is greater than 0.004 m⁻¹, assuming normal droplet size, it indicates a larger quantity of droplets entrained by the gas, suggesting a possibility of higher gas velocity through the column, and insufficient residence time of the gas within the column, which leads to incomplete absorption, low efficiency, and breakthrough of the absorption atmosphere (e.g., ammonia).

According to a preferred embodiment of the present invention, when measured at a vertical distance of 8500 mm above the gas inlet, the absorption atmosphere has a droplet average diameter D₃₂ of 200-1400 µm (preferably 400-1000 µm). More preferably, when measured at a vertical distance of 8500 mm above the gas inlet, the absorption atmosphere has a droplet size distribution of D₁₀ of 100-1000 µm, D₅₀ of 300-1800 µm, and D₉₀ of 500-2200 µm (preferably D₁₀ of 200-600 µm, D₅₀ of 400-1400 µm, and D₉₀ of 600-1800 µm). The inventors of the present invention have found that the droplet average diameter D₃₂ and droplet size distribution measured at the measurement position are closely related to the droplet average diameter D₃₂ and droplet size distribution in the spraying device region, where generally, a large droplet average diameter D₃₂ in the spraying device region corresponds to a relatively large droplet average diameter D₃₂ in this region as well and similarly, the same applies to the droplet size distribution. When the droplet average diameter and droplet size distribution are less than the lower limit, it indicates that the droplets in the spraying device region are relatively small and easily entrained. Conversely, when the droplet average diameter and droplet size distribution are greater than the upper limit, the droplets in the spraying device region are relatively large, leading to insufficient gas-liquid contact and reduced absorption efficiency.

According to one embodiment of the present invention, the spraying device comprises a spraying liquid inlet, a first spraying pipe in fluid communication with the spraying liquid inlet, a plurality (e.g., 10-26, preferably 12-22) of second spraying pipes in fluid communication with the first spraying pipe and extending perpendicularly to the first spraying pipe along both sides thereof, a plurality (e.g., 4-26, preferably 6-22) of third spraying pipes in fluid communication with the second spraying pipes and extending perpendicularly to the second spraying pipes along both sides thereof, and nozzles located at the ends of the third spraying pipes and in fluid communication therewith.

The connection means between the various spraying pipes, as well as between the third spraying pipes and the nozzles, etc. is not specifically limited by the present invention, and conventional connection means in the art can be adopted. For example, fixed connections or detachable connections can be used, preferably threaded connections, or other detachable connection means, without specific limitation.

According to one embodiment, the spraying liquid is water or an acidic aqueous solution. Preferably, the ammonia-containing gas, from bottom to top, is contacted countercurrently with the acidic aqueous solution as the spraying liquid flowing from top to bottom, and the acidic H⁺ contained in the aqueous solution neutralizes ammonia to remove it. Here, the acidic aqueous solution is an aqueous solution of an acidic substance. The acidic substance can be an inorganic acid, such as hydrochloric acid, sulfuric acid, phosphoric acid; or can also be an organic acid, such as acrylic acid, acetic acid; or can also be an acidic salt, such as ammonium sulfate, without specific limitation.

According to one embodiment of the present invention, in the cooling step, the spraying liquid and the reaction product are contacted in a countercurrent manner.

According to one embodiment of the present invention, in the cooling step, the spraying liquid input pressure at the spraying liquid inlet is controlled to be 0.06-1.00 MPaG (preferably 0.12-0.90 MPaG, more preferably 0.18-0.80 MPaG). The inventors of the present invention have found that the circulating liquid is fed into the spraying device through the spraying device inlet, passing through the first spraying pipe, the second spraying pipes and the third spraying pipes, and is delivered into the absorption column through the nozzles at the ends of the third spraying pipes. Generally, larger mist droplet size results in weaker light absorption by the droplets and reduced extinction efficiency, and mist droplet size is inversely proportional to pressure. As the pressure gradually decreases along the fluid flow direction, the mist droplet size continuously increases along the flow direction of the circulating liquid. The mist droplet size D₃₂ formed at the atomizing nozzles distal to the spraying inlet along the fluid flow direction is larger than that formed at the atomizing nozzles proximal to the spraying inlet along the fluid flow direction, which leads to lower ammonia absorption efficiency at locations distal to the spraying inlet along the fluid flow direction compared to locations proximal to the spraying inlet. Controlling the spraying liquid input pressure at the spraying liquid inlet within the aforementioned specified range ensures sufficient pressure at the distal nozzles, meets the requirements for the average mist droplet size and size distribution needed by the device, and guarantees the atomization effect. In addition, as the operation of the device continues for a long time, viscous polymers are produced during the reaction process, mixed with ammonium salts in the circulating liquid, and adhered to the walls of the spraying pipes, leading to increasing resistance along the pipe course, especially after 18 months of operation, the resistance increasing rate along the pipe course becomes more obvious, further reducing the pressure at the distal nozzles, leading to even larger mist droplet size at the distal nozzles, a wider and more uneven droplet size distribution, and poorer atomization effect. According to the present invention, by controlling the spraying liquid input pressure at the spraying liquid inlet within the aforementioned specified range, even after long-term of continuous operation, sufficient pressure at the distal nozzles can be maintained, ensuring the atomization effect.

According to one embodiment of the present invention, the plurality of second spraying pipes extend substantially in parallel in the horizontal direction perpendicularly to the first spraying pipe towards its opposite two sides.

According to one embodiment, the plurality of third spraying pipes extend substantially in parallel in the horizontal direction perpendicularly to the second spraying pipes toward their opposite sides.

According to one embodiment, the first spraying pipe has an inner diameter of 160-480 mm (preferably 200-450 mm) and a length of 4500-11500 mm (preferably 4800-10500 mm).

According to one embodiment, the plurality of second spraying pipes are same as or different from each other, each independently having an inner diameter of 30-150 mm (preferably 40-120 mm) and a length of 1200-5750 mm (preferably 1800-5250 mm).

According to one embodiment, the plurality of third spraying pipes are same as or different from each other, each independently having an inner diameter of 10-60 mm (preferably 15-50 mm) and a length of 160-325 mm (preferably 175-300 mm).

According to one embodiment of the present invention, the nozzle comprises a nozzle inlet, a rotating chamber, and a nozzle outlet, wherein the rotating chamber is configured such that the spraying liquid fed in through the nozzle inlet leaves the nozzle outlet in a rotating manner after passing through the rotating chamber. According to the present invention, the rotating chamber can adopt any known rotating chamber structure in the art, as long as it can allow the spraying liquid leave the nozzle outlet in a rotating manner after passing through the rotating chamber, without particular limitation.

According to one embodiment of the present invention, the nozzle is same as or different from each other and each independently have an inner diameter (referring to the nozzle outlet) of 3-20 mm (preferably 6-14 mm), a rotating chamber diameter of 10.0-55.0 mm (preferably 13.0-45.0 mm), and a spray angle of 65-120° (preferably 70-100°). According to the present invention, the rotating chamber can adopt any known rotating chamber structure in the art, as long as it can allow the spraying liquid leave the nozzle outlet in a rotating manner after passing through the rotating chamber, without particular limitation.

According to one embodiment of the present invention, on the first spraying pipe, the horizontal spacing between two adjacent second spraying pipes is 640-1300 mm (preferably 700-1200 mm).

According to one embodiment of the present invention, on a same second spraying pipe, the horizontal spacing between two adjacent third spraying pipes is 320-650 mm (preferably 350-600 mm).

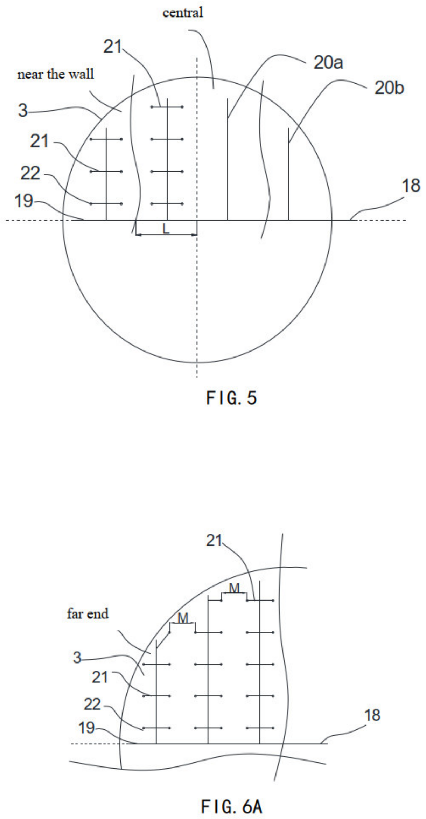

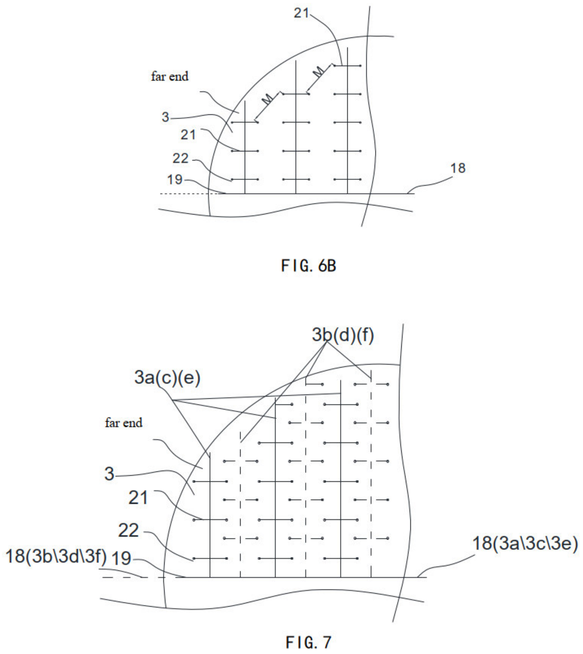

According to one embodiment of the present invention, on two adjacent second spraying pipes, the linear distance, M, (as indicated in Figs.6A and 6B) between the end of any one third spraying pipe on one second spraying pipe and the end of any one third spraying pipe on another adjacent second spraying pipe is not less than 320 mm, preferably not less than 350 mm. The inventors of the present invention have found that in order to improve the ammonia absorption efficiency, generally, any position on the cross-section inside the column is covered by at least two or more overlapping conical liquid surfaces formed taking the nozzle as center, which is under the same situation at the column wall. If the distance between the ends of two spraying pipes is too large, limited by the nozzle structure, it is difficult to meet the requirement that any position at the column wall is covered by overlapping liquid surfaces sprayed from two or more nozzles, which means, in other words, the number of droplets in the column decreases, showed by reduced light absorption rate by droplets and weakened extinction capability, thus increasing the probability of ammonia escaping from "gaps". If the distance between the ends of two spraying pipes is too small, in order to ensure the atomization quality of the spraying liquid, the amount of circulating liquid in the ammonia absorption column must be increased, i.e., increasing the pump energy consumption. In addition, as shown in Figs.6A and 6B, if the vertical projections of the upper and lower layers of spraying devices coincide, then only the upper layer of spraying device and the mutually opposing-placed spraying liquid inlets are visible.

According to one embodiment of the present invention, the nozzle is same as or different from each other and each independently have a spraying liquid ejection rate of 0.5-7.5 t/h (preferably 0.9-6.5 t/h).

According to a preferred embodiment of the present invention, the nozzle is same as or different from each other and each independently have a spraying liquid ejection pressure at the nozzle outlet of 0.03-0.85 MPaG (preferably 0.04-0.65 MPaG). The inventors of the present invention have found that for atomizing nozzles in an ammonia absorption column, pressure is one of the main factors causing liquid to form mist droplets. Within a certain pressure range, the mist droplet size increases as the pressure decreases. Compared to large atomized droplets, small atomized droplets are generally considered to have better mass and heat transfer efficiencies. Generally, the smaller the droplets, the "narrower" the size distribution, the greater the light absorption, and the stronger the extinction capability. When the spraying liquid ejection pressure at the nozzle outlet is less than 0.03 MPaG, the atomization effect of the acidic circulating liquid after passing through the spraying device is poor, and the droplet size is large, meaning insufficient contact with ammonia. When the spraying liquid ejection pressure at the nozzle outlet is greater than 0.85 MPaG, although the atomization effect of the acidic circulating liquid after passing through the spraying device is good, as the droplet size is too small, the liquid is easily entrained out of the ammonia absorption column by the gas, and the dissolved ammonium salts in the liquid cause unnecessary trouble for subsequent processes. In addition, as the operation of the device continues for a long time, viscous polymers produced during the operation also adhere to the inner cavity of the nozzle, increasing the resistance of the nozzle and causing a decrease in pressure at the nozzle outlet. For example, after 18 months of continuous operation, dirt adheres to the inner cavity of the nozzle, changing the moving behavior of the spraying liquid in the nozzle, especially increasing the instability of the atomization at the far-end nozzle, and this instability becomes more significant as the operation time of the device prolongs. According to the present invention, by controlling the spraying liquid ejection pressure at the nozzle outlet within the range specified above, even after long-term of continuous operation, the atomization at the far-end nozzle can be stabilized, ensuring the atomization effect.

According to one embodiment of the present invention, in the cooling step, the spraying liquid and the reaction product are contacted in a countercurrent manner.

According to one embodiment of the present invention, in the cooling step, the flow ratio by weight of the spraying liquid to the reaction product is 15-25:1.

According to one embodiment of the present invention, the cooling step is carried out in an absorption device, and a plurality (e.g., 2-10, preferably 4-8) of the spraying devices are arranged in layers inside the absorption device along the central axis direction of the absorption device at a predetermined vertical spacing.

According to one embodiment of the present invention, when a cross-section is obtained by cutting the absorption device at a direction perpendicular to the central axis of the absorption device, at least one (preferably all) selected from the first spraying pipe, the second spraying pipe, and the third spraying pipe of one of the plurality of spraying devices and at least one (preferably all) selected from the first spraying pipe, the second spraying pipe, and the third spraying pipe of another of the plurality of spraying devices substantially coincide in the projection on the cross-section. That is, the projections of the nozzles (cone centers) of each layer coincide on the cross-section. Thus, the distribution of ammonia in the gas channels is also uniform.

According to one embodiment of the present invention, all the nozzles of the one spraying device and of the any other spraying device substantially coincide in the projection on the cross-section. The inventors of the present invention have found that the plurality of spraying devices in the absorption device are not only relatively independent individuals but also integrated into a whole. The circulating liquid is delivered to the nozzles of each spraying device via the first spraying pipe, second spraying pipes, and third spraying pipes of each spraying device, and forms a hollow conical liquid surface centered on the nozzle. The gas is contacted with the circulating liquid counter-currently. The gas must pass through the conical liquid surface formed by a lower layer spraying device to be contacted with the conical liquid surface formed by the next upper layer spraying device. At the moment the gas passes through the conical liquid surface, the ammonia in the gas neutralizes with the acid in the liquid. As the ammonia-containing gas passes through a plurality of hollow conical liquid surfaces of a plurality of spraying devices, it is eventually completely neutralized by the acid in the circulating liquid. The space between the hollow conical liquid surfaces of the two layers, i.e., an upper layer and a lower layer, of the spraying devices can be regarded as a gas rising channel. As each stage requires an independent liquid phase circulation spraying device, the rising gas channel has a certain height. The projections of at least one (preferably all) of the first spraying pipe, the second spraying pipe, and the third spraying pipe on the cross-section substantially coincide, meaning that the projections of the nozzles (cone centers) of each layer coincide on the cross-section. Thus, the distribution of ammonia in the gas channels is also uniform, integration thereof with droplets is more sufficient, and the extinction efficiency is more consistent. If the projections of the nozzles of the upper layer and of the lower layer do not coincide on the cross-section, as the hollow conical liquid surfaces of the upper and lower layers are not at the same position, the gas rising channel is changed, then after the rising gas passes through such a gas channel, due to different extinction efficiencies in different channels, the problem of uneven gas distribution is likely to occur between the gas channels, reducing the ammonia absorption effect. According to one embodiment of the present invention, the vertical spacing between two adjacent spraying devices (calculated as the vertical spacing of the spraying liquid inlets of the spraying devices) is 650-1350 mm, preferably 750-1200 mm.

The inventors of the present invention have found that if the projections of the nozzles of the upper layer and of the lower layer do not coincide on the cross-section, as the hollow conical liquid surfaces of the upper and lower layers are not at the same position, the gas rising channels are changed, with some channels becoming "wider" and some others becoming "narrower". A "wider" channel also means fewer droplets within it and reduced extinction capability. Conversely, a "narrower" channel increases extinction capability. After the rising gas passes through gas channels of different heights, due to different gas residence times within the channels, gas distribution unevenness within the channels is likely to occur. That is, when the ammonia-containing gas passes through the hollow conical liquid surfaces, it results in excess acid in some regions of the liquid surface, while in some other regions of the liquid surface, insufficient acid leads to ammonia breakthrough, thereby reducing the ammonia absorption effect.

The inventors of the present invention have also found that if the projections of the nozzles of the upper layer and of the lower layer do not coincide on the cross-section, the spraying liquid ejected from the upper layer nozzles and that from the lower layer nozzles are subjected to more collisions. When two droplets collide, behaviors such as separation, coalescence, breakup, etc., can occur. The inventors have found that when the projections of the nozzles of the upper layer and of the lower layer do not coincide, droplets generated by the upper layer nozzles and droplets generated by the lower layer nozzles are more likely to coalesce during collision, forming larger droplets, and simultaneously, the number of droplets relatively decreases, represented by a decrease in extinction efficiency, which is unbeneficial to ammonia absorption.

The inventors of the present invention have also found that the circulating liquid in each spraying device flows along the first spraying pipe to the second spraying pipes and then to the third spraying pipes until the nozzles. During the fluid flow, the pressure continuously drops along the pipe course due to the influence of pipe wall resistance.

The pressure at nozzles distal to the spraying liquid inlet is lower than that at nozzles proximal to the spraying liquid inlet. As the pressure at the most distal nozzles is relatively lowest, relatively, the droplet average size there is arger, the droplet size distribution is broader, the light absorption efficiency by droplets is lowest, and the atomization effect is poorest, leading to insufficient gas-liquid contact at the most distal nozzles, which easily cause ammonia escape. As the operation cycle of the device prolongs, e.g., the device is operated continuously for 18 months or even longer, solid impurities and viscous heavy components adhere to the inner wall of the pipes, further increasing the pipe wall resistance, such that the light absorption efficiency by droplets further decreases, i.e., the extinction efficiency further decreases, and the atomization effect at distal nozzles becomes even worse, causing more ammonia escape. If the spraying liquid inlets of the plurality of layers of spraying devices are on a same side, as the distal nozzles of each layer are on the same side, the gas-liquid contact in this region is weakest, and ammonia in the gas phase is more likely to escape from the ammonia absorption column from this region.

Based on such discovery, according to one embodiment of the present invention, the angle between the projection of the spraying liquid inlet of the one spraying device and that of the spraying liquid inlet of the any other spraying device on the cross-section is 180°. At the initial period of the operation of the device, as the pipelines of the spraying device are relatively clean, the distal nozzles of the spraying device are sufficient to atomize the spraying liquid into droplets with appropriate size. After the device operates continuously for 18 months or even longer, although at the most distal nozzle of one spraying device, the poor atomization effect of the nozzle deteriorate, leading to ammonia escape caused by poor gas-liquid contact, the escaping ammonia is captured by the spraying liquid from the proximal nozzles of the upper layer spraying device and undergoes a neutralization reaction to form the corresponding salt, such that the droplet average size and droplet size distribution in the region near the inlet ends of the upper and lower opposing-placed spraying devices are similar, meaning the extinction efficiency is similar. Usually, a plurality of layers of spraying devices are arranged in the ammonia absorption column, such as 3 layers, 4 layers, 5 layers or more. When the projection angle between the spraying liquid inlets of the upper one (or two) layer(s) of spraying device(s) and the lower one (or two) layer(s) of spraying device(s) on the cross-section is 180°, ammonia can be absorbed to a greater extent, thereby reducing ammonia escape and also reducing acid consumption to a greater extent.

According to one embodiment of the present invention, two nozzles with substantially coinciding projections have the same spray diameter.

According to one embodiment of the present invention, among all the spraying devices, the angle between the projections on the cross-section of the spraying liquid inlets of any two odd-numbered spraying devices is 0°, the angle between the projections on the cross-section of the spraying liquid inlets of any two even-numbered spraying devices is 0°, and the angle between the projections on the cross-section of the spraying liquid inlet of any odd-numbered spraying device and of the spraying liquid inlet of any even-numbered spraying device is 180°. The inventors of the present invention have found that such arrangement can maximumly satisfy the uniform distribution of ammonia in the gas phase within the gas channels.

According to one embodiment of the present invention, two nozzles with substantially coinciding projections have the same spraying liquid rotating direction. The inventors of the present invention have found that as the spraying liquids ejected from the coinciding projection nozzles of two spraying devices collide during descending, the droplet states of the respective nozzles are different. Relatively speaking, two nozzles with coinciding projections and opposite rotating directions are more likely to cause droplet breakage, forming a plurality of smaller droplets compared to two nozzles with the same rotating direction, which enhances the light absorption rate and increases the extinction efficiency. However, if the droplets are too small, they are easily entrained by the gas and escape.

According to one embodiment of the present invention, on at least one (preferably all) of the second spraying pipes, two adjacent (preferably all) nozzles located on a same side of the second spraying pipe are configured such that the spraying liquid is ejected out with the same rotating direction. The inventors of the present invention have found that the spraying liquid is fed into the rotating chamber at the tangential direction of the nozzle, and after passing through the nozzle outlet, forms a hollow cone with the nozzle outlet as vertex of the cone. To achieve uniformity of the spraying liquid within the column, two adjacent nozzles are required to be equidistantly distributed on the column cross-section, i.e., the spraying liquid enters the nozzles with the same tangential direction. Therefore, the spraying liquid on a same side of the second spraying pipe is ejected out with the same rotating direction, while the spraying liquids on the opposite two sides of the second spraying pipe are ejected out with opposite rotating directions. Thus, after the spraying liquids ejected from nozzles on the same second spraying pipe coalesce and collide, more droplets maintain their light absorption state unchanged and continue descending along their original motion direction.

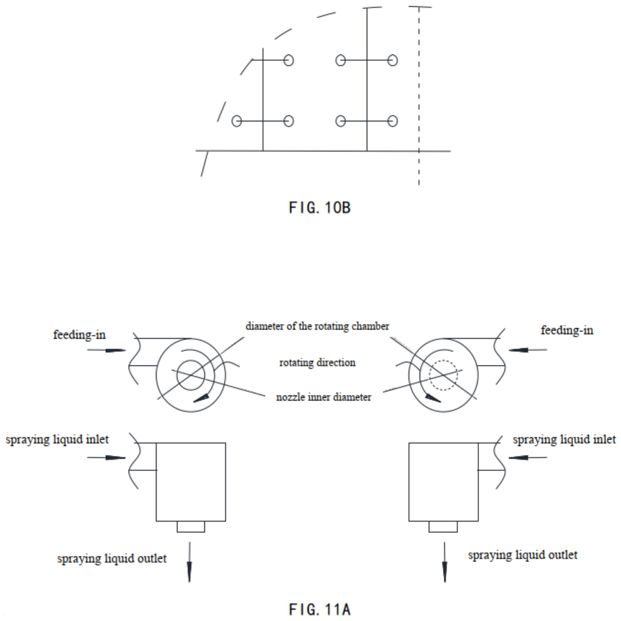

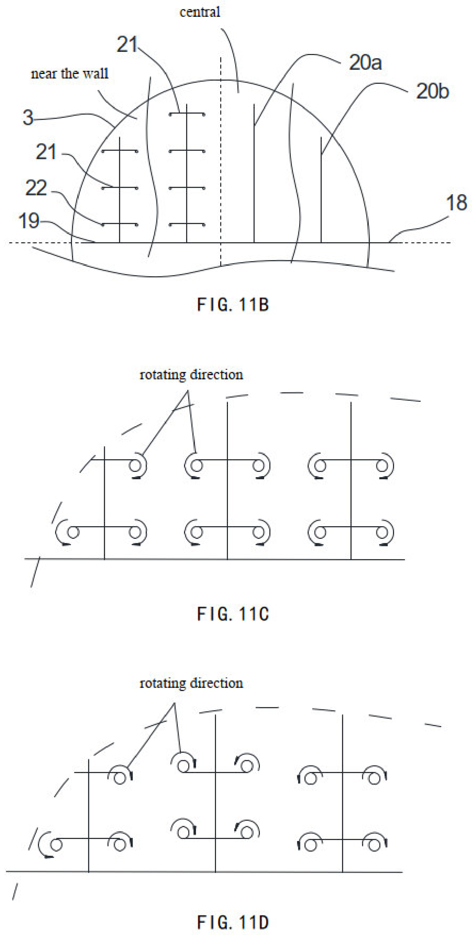

According to one embodiment of the present invention, all nozzles toward the facing sides of two side-by-side adjacent second spraying pipes are configured such that the spraying liquid is ejected out with opposite rotating directions. Here, "side-by-side adjacent" refers to being on a same side of the first spraying pipe and adjacent to each other, and "respectively toward the facing sides" refers to the respective sides of one of the second spraying pipe and of another second spraying pipe that face each other, as shown in Fig.11C. After the spraying liquids ejected from the two adjacent nozzles of side-by-side adjacent second spraying pipes collide during their respective descending processes, the droplets can still maintain their original state and continue moving downward. The droplets are not prone to coalesce into larger droplets, nor are they prone to break into finer droplets.

According to one embodiment of the present invention, on at least one (preferably all) of the second spraying pipes, at least one (preferably all) nozzle located on one side of the second spraying pipe is configured such that the spraying liquid is ejected out with a rotating direction A, while at least one (preferably all) nozzle located on the opposite side of the second spraying pipe is configured such that the spraying liquid is ejected out with a rotating direction B, wherein the rotating direction A is opposite to the rotating direction B.

According to one embodiment of the present invention, the rotating direction A is clockwise, and the rotating direction B is counterclockwise.

According to one embodiment of the present invention, among all the nozzles of the spraying device, the number of nozzles ejecting the spraying liquid with the rotating direction A is equal or substantially equal to the number of nozzles ejecting the spraying liquid with the rotating direction B. As mentioned above, the premise of uniform spraying is the uniform distribution of nozzles within the column, usually with axisymmetric distribution preferably. Therefore, the inventors of the present invention have found that the rotating directions of the nozzles appear in axisymmetric pairs. If the rotating directions of the paired nozzles are all the same, it means that all nozzles have a same rotating direction, which easily causes the spraying liquids ejected from two adjacent nozzles to collide and become larger during rotation and descending, weakening the extinction efficiency, during which the total effective contact area with gaseous ammonia decreases, such that the ammonia absorption efficiency is reduced.

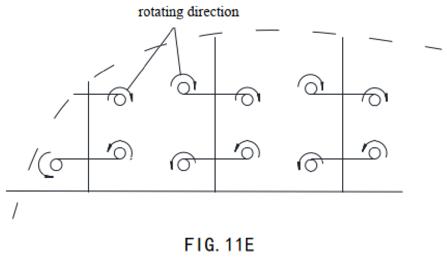

According to one embodiment of the present invention, on at least one (preferably all) of the second spraying pipes, two adjacent (preferably all) nozzles located on a same side of the second spraying pipe are configured such that the spraying liquids are ejected out with opposite rotating directions. The third spraying pipes extend substantially in parallel in the horizontal direction perpendicularly to the second spraying pipes towards their opposite two sides. All nozzles on the same horizontal extension line of the second spraying pipe are configured such that the spraying liquid is ejected out with the same rotating direction, as shown in Fig.11E.

According to one embodiment of the present invention, on at least one (preferably all) of the second spraying pipes, one nozzle located on the second spraying pipe is configured such that the spraying liquid is ejected out with a rotating direction A, while at least another adjacent nozzle on the same side is configured such that the spraying liquid is ejected out with a rotating direction B. At least one (preferably all) nozzle located on the opposite side of the second spraying pipe is configured such that the spraying liquid is ejected out with a rotating direction A, wherein the rotating direction A is opposite to the rotating direction B.

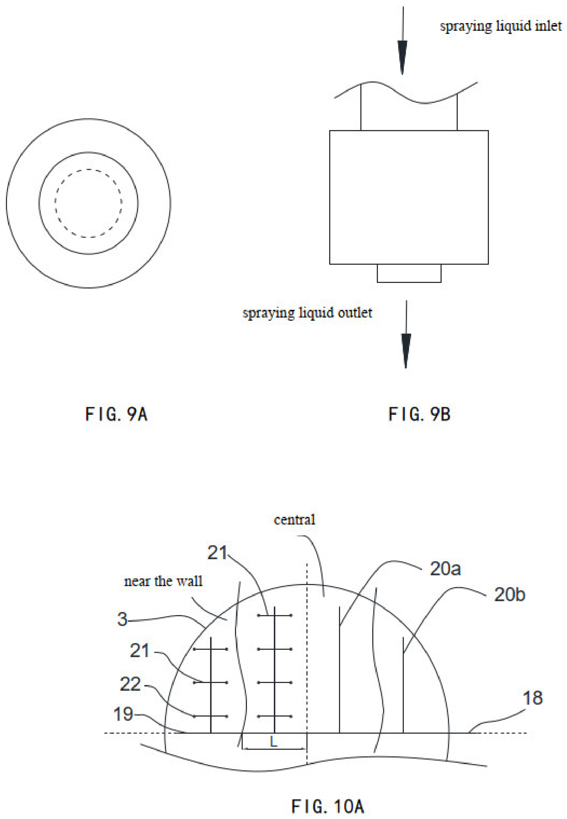

According to one embodiment, the nozzle comprises a nozzle inlet, a nozzle cavity, and a nozzle outlet, wherein the cavity has a special structure such that the spraying liquid fed in through the nozzle inlet forms droplets after passing through the cavity and leaving the nozzle outlet, as shown in Fig.9. The cavity can adopt any known structure in the art, as long as it can make the spraying liquid form droplets upon leaving the nozzle outlet, without particular limitation.

According to one embodiment, the spraying liquid is fed into the cavity from top of the nozzle, and after passing through the nozzle outlet, forms a solid cone with the nozzle outlet as the vertex. Usually, two adjacent nozzles are equidistantly distributed on the column cross-section, and the projections of the nozzles of a plurality of spraying devices substantially coincide. After the spraying liquids ejected from two adjacent nozzles collide during their respective descending processes, the droplets can still maintain their original state and continue moving downward.

According to one embodiment, the vertical spacing between two adjacent spraying devices (calculated as the vertical spacing between the spraying liquid inlets of the spraying devices) is 650-1350 mm (preferably 750-1200 mm). The inventors of the present invention have found that when the vertical spacing between two adjacent spraying devices is less than 650 mm, for an ammonia absorption column with a given number of spraying devices, the contact time between the rising ammonia-containing gas and the descending circulating liquid is insufficient, leading to poorer gas-liquid integration, reduced extinction efficiency, and a part of the ammonia in the gas phase to directly pass through the hollow conical liquid surface formed by the circulating liquid, resulting in poor ammonia absorption efficiency. Although the number of spraying devices can be increased to meet sufficient gas-liquid contact time and achieve complete absorption of ammonia in the gas phase, this would increase the total amount of circulating liquid and increase pump energy consumption, which is obviously uneconomical. When the vertical spacing between two adjacent spraying devices is greater than 1350 mm, with the same number of spraying devices, the height of the column increases, i.e., equipment investment costs increase, and besides, maintenance and repair difficulty also increases.

According to one embodiment, the difference (absolute value) in the spraying liquid input pressures at the spraying liquid inlets of any two spraying devices is less than 0.024 MPa (preferably less than 0.018 MPa, more preferably less than 0.012 MPa). The inventors of the present invention have found that the size of the atomized liquid droplets is closely associated with the pressure at the nozzle. Too high or too low pressure is disadvantageous to the operation of the device. The nozzle pressure originates from the spraying liquid input pressure at the spraying liquid inlet, such that theoretically, it is desired that the spraying liquid input pressures at the spraying liquid inlets are the same. However, in practice, as the multiple layers of spraying devices are arranged vertically, there is a pressure drop loss when the circulation pump delivers the circulating liquid to each layer of spraying devices. Therefore, the pressure difference at the spraying liquid inlets of any two spraying devices should be as low as possible, so that all nozzles of the uppermost and lowest spraying devices meet the optimal pressure conditions, ensuring that the droplet average sizes and droplet size distributions on the longitudinal sections of the device are similar, meaning the extinction efficiencies along the device's longitudinal direction are also the same.

According to one embodiment of the present invention, the absorption device has an inner diameter of 4.5-11.5 m (preferably 4.8-10.5 m).

According to one embodiment of the present invention, the absorption device further comprises a shell and a gas inlet. According to the present invention, the spraying device is arranged inside the shell of the absorption device. Additionally, the reaction product is fed into the absorption device through the gas inlet.

According to one embodiment of the present invention, the gas inlet is located below the spraying device along the central axis direction of the absorption device.

According to one embodiment, the vertical distance between the gas inlet and the spraying liquid inlet of the spraying device (when more than one spraying device are present, referring to the spraying device closest to the gas inlet) is 800-6000 mm (preferably 1000-5000 mm). The inventors of the present invention have found that the gas is fed into the column through the inlet along a downwardly curved semicircular inlet pipe and then is delivered from bottom to top. Relatively speaking, the gas concentration is highest at the inlet pipe. As the gas moves upward, due to the difference in gas concentration, the gas diffuses toward the periphery, and finally the gas concentration on the column cross-section becomes uniform. If the vertical distance is less than 800 mm, the gas concentration may not diffuse sufficiently, resulting in uneven concentrations and uneven gas-liquid mixing, leading to uneven extinction efficiency, which can easily cause local incomplete ammonia absorption and local excess amount of acid. If the vertical distance is too large, on one hand, the tangent height of the ammonia absorption column is too high, increasing equipment investment. On the other hand, as the spraying liquid rotates and falls, colliding droplets undergo behaviors such as separation, coalescence, and breakup, wherein corresponding to the occurrence of coalescence, larger droplets are formed; while corresponding to the occurrence of breakup, smaller droplets are formed. The longer the spray distance of the droplets, the more likely coalescence or breakup occurs, and the droplet size distribution becomes "wider", potentially leading to decreased extinction efficiency, which is also disadvantageous to ammonia absorption.

According to one embodiment of the present invention, the gas inlet has an inner diameter of 800-1900 mm (preferably 900-1700 mm).

According to one embodiment, the linear velocity of the gas inside the shell is 0.6-1.5 m/s (preferably 0.7-1.3 m/s). The inventors of the present invention have found that the operating velocity inside the shell affects the gas diffusion velocity. The higher the operating velocity inside the shell, the stronger the turbulent effect, the more droplets are entrained, and the relatively higher the extinction efficiency, which is beneficial for gas diffusion, and thus the diffusion distance is shorter. When the velocity inside the shell is less than 0.6 m/s, relatively speaking, the time required for the gas to diffuse to uniformity is long, i.e., the distance from the inlet to the first layer of spraying device increases. However, when the linear velocity inside the shell is higher than 1.5 m/s, as the droplets of the spraying liquid from the spraying device are usually in the form of mist droplets, these mist droplets are easy to be entrained by the gas. The greater the velocity inside the shell, the more severe the mist entrainment phenomenon, resulting in more ammonium salt-containing mist droplets being carried out of the ammonia absorption column by the gas.

According to one embodiment, in the internal space of the absorption device between the gas inlet and the spraying device (when more than one spraying device are present, referring to the spraying device closest to the gas inlet), no mechanical members that can substantially affect the flowing of gas are arranged, such as mechanical members that disturb the flowing of gas, particularly baffles, trays, packings, etc. The inventors of the present invention have found that although internal components can be added to make the gaseous ammonia uniformly distributed on the cross-section before contacting with the first layer of spraying liquid, any type of mechanical member may increase the system pressure of the device, ultimately reflected in an increase in reaction pressure, reducing the yield of the target product. The smaller the droplet size, the larger the contact surface between the droplet and the gaseous ammonia, and the better the absorption effect, and vice versa, the worse the ammonia absorption effect. Gas is relatively easy to diffuses. Even if gaseous ammonia is not completely uniformly dispersed at the first layer of spraying position, with slightly poorer extinction efficiency, the gaseous ammonia continues to diffuse during the rising process and will be captured and absorbed by the spraying liquid of the subsequent layers of spraying devices. Therefore, although adding components here satisfies the purpose of rapid and uniform dispersion of gaseous ammonia, the vertical distance from the first layer of spraying device to the inlet is 800-6000 mm, preferably 1000-5000 mm, which can satisfy both the efficient reaction of the preceding reaction section and the extinction efficiency of the current column, meeting the ammonia absorption efficiency, resulting in higher economic efficiency for the entire device.

According to one embodiment of the present invention, in the reaction step, the hydrocarbon raw material is propylene, and the molar ratio of propylene/ammonia/air (calculated as molecular oxygen) is 1:1.1-1.3:1.8-2.0, and the reaction comprises a temperature of 420-440°C, a reaction pressure (gauge pressure) of 0.03-0.14 MPa, and a catalyst weight hourly space velocity of 0.06-0.15 h⁻¹, or alternatively, the hydrocarbon raw material is isobutylene, and the molar ratio of isobutylene/ammonia/air (calculated as molecular oxygen) is 1:1.3-1.6:2.2-2.8, and the reaction comprises a temperature of 395-420°C, a reaction pressure (gauge pressure) of 0.03-0.14 MPa, and a catalyst weight hourly space velocity of 0.08-0.17 h⁻¹.

According to one embodiment, depending on the various reaction steps, the composition of the reaction product comprises generally about 10-20 wt% of C₁₋₄ nitriles (e.g., acrylonitrile, etc.), about 0.1-5 wt% of C₁₋₄ oxygen-containing compounds (e.g., acrolein, etc.), about 0.1-5 wt% of O₂, about 0.1-2 wt% of ammonia, and a balance of other impurities, based on the total weight of the reaction product as 100 wt%. After preliminary cooling, the reaction product has a temperature of generally 195-235°C, and a pressure of generally 0.03-0.14 MPaG. According to the present invention, for this specific reaction product, the aforementioned technical effects of the producing process of the present invention are particularly excellent.

According to one embodiment of the present invention, in the cooling step, the spraying liquid cools the reaction product from a temperature of 195-235°C to 81-86°C. Additionally, preferably, the spraying liquid reduces the ammonia content of the reaction product to 150 ppm or less.

A specific embodiment of the present invention will be described in detail below by way of example with reference to the drawings.

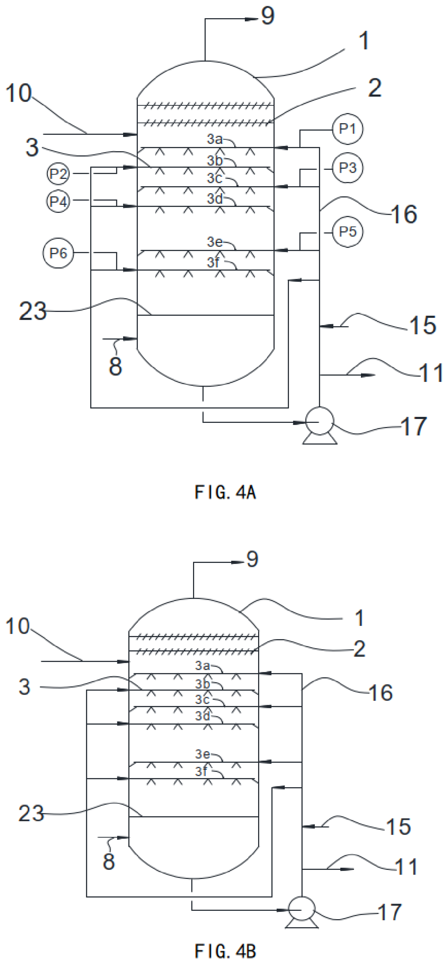

For example, as shown in Fig.4A, according to the present invention, a reaction gas at 225°C and unreacted ammonia are fed into the ammonia absorption column 1 through the ammonia-containing gas feeding inlet 8. The circulating liquid is withdrawn from the bottom of the column and delivered by the circulation pump 17 to the multiple layers of spraying devices 3a-3f. The spraying devices 3a-3f are arranged in the column from top to bottom in sequence, wherein spraying devices 3a, 3c, 3e are placed on a same side, while spraying devices 3b, 3d, 3f are placed on the side opposite to the spraying devices 3a, 3c, 3e. The vertical distance between the ammonia-containing gas feeding inlet 8 and the spraying device 3f is 1800 mm. The spraying liquid input pressures at the spraying liquid inlets of spraying devices 3a, 3c, 3e are 0.327 MPaG, 0.330 MPaG, and 0.334 MPaG, respectively. The spraying liquid input pressures at the spraying liquid inlets of spraying devices 3a, 3c, 3e are 0.327 MPaG, 0.330 MPaG, and 0.334 MPaG, respectively. Sulfuric acid is added through the acid-containing solution inlet 15 to the outlet pipeline of the circulation pump. The circulating liquid is delivered through the spraying device 3, fed in through the inlet 18 of the spraying device 3, and passed along the fluid direction through the first spraying pipe 19, the second spraying pipes 20a (20b), and the third spraying pipes 21 to the atomizing nozzles 22. The circulating liquid ejected out through the nozzles 22 forms an acid mist layer in the ammonia absorption column, absorbing the gaseous ammonia from the gas feeding inlet 8. The tail gas is discharged from the gas phase outlet 9 of the ammonia absorption column. The temperature of the top tail gas is 84°C. The projections of the ends of the third spraying pipes of spraying devices 3a-3f coincide on the column cross-section, as shown in Fig.5.

Further, for example, as shown in Fig.4B, according to the present invention, the reaction gas at a temperature of 225°C and unreacted ammonia are fed into the ammonia absorption column 1 through the ammonia-containing gas feeding inlet 8. The circulating liquid is withdrawn from the bottom of the column and delivered by the circulation pump 17 to spraying devices 3a-3f, wherein spraying devices 3a, 3c, 3e are placed on a same side, while spraying devices 3b, 3d, 3f are placed on the side opposing-placed to spraying devices 3a, 3c, 3e. An acid-containing liquid is added through the acid-containing solution inlet 15 to the outlet pipeline of the circulation pump. The circulating liquid is delivered through the spraying device 3, fed in through the inlet 18 of the spraying device, and passed along the fluid direction through the first spraying pipe 19, the second spraying pipes 20a (20b), and the third spraying pipes 21 to the atomizing nozzles 22. The ratio of left-rotating atomizing nozzles to right-rotating atomizing nozzles is 1:1. The circulating liquid ejected out through the nozzles 22 forms an acid mist layer in the ammonia absorption column, absorbing the gaseous ammonia from the gas feeding inlet 8. The tail gas is discharged from the gas phase outlet 9 of the ammonia absorption column. The temperature of the top tail gas is 84°C. The projections of the ends of the third spraying pipes of spraying devices 3a-3f coincide on the column cross-section, as shown in Fig.6A. The schematic diagram of the nozzle structure of the spraying device and the top view of the spraying device are shown in Figs.11C and 11B, respectively.

### EXAMPLES

The present invention will be further illustrated referring to the following Examples in more detail, but the present invention is not limited to these Examples.

In the following Examples and Comparative Examples, the residual ammonia concentration in the tail gas can be measured by offline analysis. Specifically, a certain volume (V) of gas is sampled from the top of the ammonia absorption column, the gas is absorbed by a certain amount of water, and the ammonia amount in the water is analyzed and converted to a gaseous ammonia volume (v). The residual ammonia concentration in the tail gas is calculated as v/V. Additionally, acid consumption is measured by an acid flow meter for the ammonia absorption column.

### Example 1

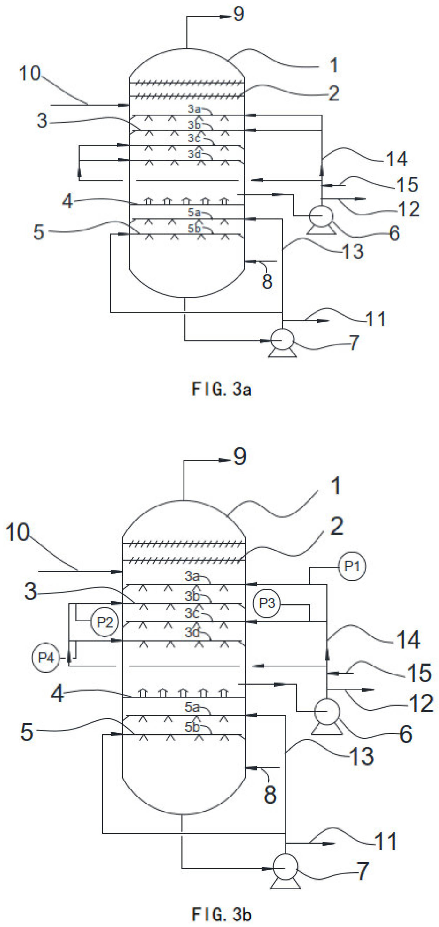

The ammonia absorption column had a two-stage structure as shown in Fig.3b. The inner diameter of the absorption column was 7200 mm, and no gas distributor 23 was arranged inside the column. The linear velocity of the reaction gas in the column was 1.1 m/s. The acid added to the circulating liquid was sulfuric acid. The acid-containing circulating liquid was fed to the absorption column through 4 spraying devices via an upper section circulation pump. The fluid directions in the first spraying pipes of spraying devices 3a, 3c were opposite to those of 3b, 3d, i.e., the projection angle between the two adjacent spraying liquid inlets of two adjacent spraying devices being 180° . The spraying liquid input pressures at the spraying liquid inlets of spraying devices 3a(b) and 3c(d) were 0.440 MPaG and 0.446 MPaG, respectively. The spraying liquid ejection pressure was 0.051 MPaG. The interval distance between two adjacent spraying devices was 1200 mm. Each spraying device had 16 second spraying pipes, and the second spraying pipes were equipped with 11-18 third spraying pipes. The projections of the ends of the third spraying pipes of the spraying devices coincided and the rotating directions were the same. All nozzles on the same side of the second spraying pipe had the same rotating chamber direction. The nozzles on the opposite two sides of the second spraying pipe had opposite rotating chamber directions, and all nozzles toward the facing sides of two side-by-side adjacent second spraying pipes had opposite rotating directions. The numbers of nozzles with the same rotating chamber direction were 480 and 480, respectively. The first spraying pipe of the spraying device had an inner diameter of 250 mm and a length of 7000 mm. The spacing of the second spraying pipes of the spraying device was 820 mm. The second spraying pipes had an inner diameter of 100 mm and lengths of 2100 mm-3450 mm. The spacing of the third spraying pipes of the spraying device was 410 mm. The third spraying pipes had an inner diameter of 40 mm and a length of 205 mm. The spraying device had a total of 960 nozzles. The distance between the ends of two adjacent third spraying pipes as shown in Fig.6B was 580 mm. The nozzle outlet diameter was 11.5 mm, the nozzle rotating chamber diameter was 40 mm, and the spray angle of the nozzles was 75 ° . The vertical distance from the gas feeding inlet 8 to the spraying device 3d was 4000 mm, and the inner diameter of the feeding inlet was 1300 mm. The reaction product gas fed through the feeding inlet contained about 0.71 wt% of ammonia, 13.2 wt% of acrylonitrile, and balance of impurities such as O₂, acrolein, nitrogen, etc., having a temperature of 225°C and a pressure of 0.06 MPaG. The spraying liquid ejection rate per nozzle was 4.8 t/h, and the weight ratio of the spraying liquid to the reaction product gas fed in through the gas inlet was 20. At the initial period of the operation of the device, the residual ammonia concentration in the tail gas at the reaction outlet was 41 ppm. After 24 months of operation, the residual ammonia concentration in the tail gas at the reaction outlet was 52 ppm. The ratio of acid consumption after 24 months of operation / acid consumption after 1 month of operation was 1.02.

In this Example, when measured at a vertical distance of 3000 mm above the gas inlet, the absorption atmosphere had an extinction coefficient of 0.011 m⁻¹, a droplet average diameter D₃₂ of 1130 µm, and a droplet size distribution of D₁₀ of 625 µm, D₅₀ of 1328 µm, and D₉₀ of 2195 µm. Additionally, when measured at a vertical distance of 8500 mm above the gas inlet, the absorption atmosphere had an extinction coefficient of 0.0021 m⁻¹, a droplet average diameter D₃₂ of 462 µm, and a droplet size distribution of D₁₀ of 406 µm, D₅₀ of 593 µm, and D₉₀ of 894 µm.

### Example 2

The ammonia absorption column had a single-stage structure as shown in Fig.4B. The inner diameter of the absorption column was 7200 mm, and no gas distributor 23 was arranged inside the column. The linear velocity of the reaction gas in the column was 1.1 m/s. The acid added to the circulating liquid was sulfuric acid. The acid-containing circulating liquid was delivered to the absorption column through 6 spraying devices via a circulation pump. The fluid directions in the first spraying pipes of spraying devices 3a, 3c, 3e were opposite to those of spraying devices 3b, 3d, 3f, i.e., the projection angle between two adjacent spraying liquid inlets being 180°. The top view of the spraying device was as shown in Fig.11B and the detailed top view of the spraying device was as shown in Fig.11C. The spraying liquid input pressures at the spraying liquid inlets of spraying devices 3a(b), 3c(d), and 3e(f) were 0.425 MPaG, 0.430 MPaG, and 0.435 MPaG, respectively. The spraying liquid ejection pressure was respectively 0.055 MPaG. The vertical spacing between two adjacent spraying devices was 880 mm. Each spraying device had 14 second spraying pipes, and the second spraying pipes were equipped with 6 to 14 third spraying pipes. The projections of the ends of the third spraying pipes of the spraying devices coincided and the rotating directions were the same. All nozzles on the same side of the second spraying pipe had the same rotating chamber direction. The nozzles on the opposite two sides of the second spraying pipe had opposite rotating chamber directions, and all nozzles toward the facing sides of two side-by-side adjacent second spraying pipes had opposite rotating directions. The numbers of nozzles with the same rotating chamber direction were 456 and 456, respectively. The first spraying pipe of the spraying device had an inner diameter of 200 mm and a length of 7000 mm. The spacing of the second spraying pipes of the spraying device was 1000 mm, and the second spraying pipes had an inner diameter of 100 mm and a length of 1850-3450 mm. The spacing of the third spraying pipes of the spraying device was 500 mm, and the third spraying pipes had an inner diameter of 40 mm and a length of 250 mm. The projections of the ends of the third spraying pipes of the spraying devices coincided, and the distance between the ends of two adjacent third spraying pipes as shown in Fig.6A was 500 mm. The spraying device had a total of 912 nozzles. The nozzle outlet diameter of the spraying device was 11.7 mm, the nozzle rotating chamber diameter was 36 mm, and the spray angle was 80° . The vertical distance from the gas feeding inlet 8 to the spraying device 3f was 1500 mm, the vertical distance from the gas feeding inlet 8 to spraying device 3d was 4000 mm, and the inner diameter of the feeding inlet was 1200 mm. The reaction product gas fed through the feeding inlet contained about 0.71 wt% of ammonia, 13.2 wt% of acrylonitrile, and balance of impurities such as O₂, acrolein, nitrogen, etc., having a temperature of 225°C and a pressure of 0.06 MPaG. The spraying liquid ejection rate per nozzle was 5.1 t/h, and the weight ratio of the spraying liquid to the reaction product gas passed through the gas inlet was 20. At the initial period of the operation of the device, the residual ammonia concentration in the tail gas at the reaction outlet was 27 ppm. After 24 months of operation, the residual ammonia concentration in the tail gas at the reaction outlet was 34 ppm. The ratio of acid consumption after 24 months of operation / acid consumption after 1 month of operation was 1.01.

In this Example, when measured at a vertical distance of 3000 mm above the gas inlet, the absorption atmosphere had an extinction coefficient of 0.0128 m⁻¹, a droplet average diameter D₃₂ of 1054 µm, and a droplet size distribution of D₁₀ of 832 µm, D₅₀ of 1242 µm, and D₉₀ of 1956 µm. Additionally, when measured at a vertical distance of 8500 mm above the gas inlet, the absorption atmosphere had an extinction coefficient of 0.0019 m⁻¹, a droplet average diameter D₃₂ of 412 µm, and a droplet size distribution of D₁₀ of 386 µm, D₅₀ of 574 µm, and D₉₀ of 878 µm.

### Example 3

Example 2 was repeated, except that the spraying liquid input pressures at the spraying liquid inlets of spraying devices 3a(b), 3c(d), and 3e(f) were 0.152 MPaG, 0.160 MPaG, and 0.168 MPaG, respectively, the spraying liquid ejection pressure was respectively 0.04 MPaG, and the nozzle outlet diameter of the spraying device was 11.9 mm. At the initial period of the operation of the device, the residual ammonia concentration in the tail gas at the reaction outlet was 72 ppm. After 24 months of operation, the residual ammonia concentration in the tail gas at the reaction outlet was 98 ppm.

In this Example, when measured at a vertical distance of 3000 mm above the gas inlet, the absorption atmosphere had an extinction coefficient of 0.0058 m⁻¹, a droplet average diameter D₃₂ of 2226 µm, and a droplet size distribution of D₁₀ of 1298 µm, D₅₀ of 2384 µm, and D₉₀ of 3203 µm. Additionally, when measured at a vertical distance of 8500 mm above the gas inlet, the absorption atmosphere had an extinction coefficient of 0.0013 m⁻¹, a droplet average diameter D₃₂ of 542 µm, and a droplet size distribution of D₁₀ of 427 µm, D₅₀ of 671 µm, and D₉₀ of 914 µm.

### Example 4

Example 2 was repeated, except that the spraying liquid input pressures at the spraying liquid inlets of spraying devices 3a(b), 3c(d), and 3e(f) were 0.838 MPaG, 0.844 MPaG, and 0.85 MPaG, respectively, the spraying liquid ejection pressure was respectively 0.42 MPaG, and the nozzle outlet diameter of the spraying device was 12.1 mm. At the initial period of the operation of the device, the residual ammonia concentration in the tail gas at the reaction outlet was 84 ppm. After 24 months of operation, the residual ammonia concentration in the tail gas at the reaction outlet was 92 ppm.

In this Example, when measured at a vertical distance of 3000 mm above the gas inlet, the absorption atmosphere had an extinction coefficient of 0.018 m⁻¹, a droplet average diameter D₃₂ of 726 µm, and a droplet size distribution of D₁₀ of 422 µm, D₅₀ of 989 µm, and D₉₀ of 1803 µm. Additionally, when measured at a vertical distance of 8500 mm above the gas inlet, the absorption atmosphere had an extinction coefficient of 0.0035 m⁻¹, a droplet average diameter D₃₂ of 321 µm, and a droplet size distribution of D₁₀ of 267 µm, D₅₀ of 389 µm, and D₉₀ of 543 µm.

### Example 5

Example 2 was repeated, except that the spraying liquid input pressures at the spraying liquid inlets of spraying devices 3a(b), 3c(d), and 3e(f) were 0.950 MPaG, 0.954 MPaG, and 0.959 MPaG, respectively, the spraying liquid ejection pressure was respectively 0.42 MPaG, and the nozzle outlet diameter of the spraying device was 11.1 mm. At the initial period of the operation of the device, the residual ammonia concentration in the tail gas at the reaction outlet was 105 ppm. After 24 months of operation, the residual ammonia concentration in the tail gas at the reaction outlet was 116 ppm.

In this Example, when measured at a vertical distance of 3000 mm above the gas inlet, the absorption atmosphere had an extinction coefficient of 0.01925 m⁻¹, a droplet average diameter D₃₂ of 432 µm, and a droplet size distribution of D₁₀ of 392 µm, D₅₀ of 750 µm, and D₉₀ of 1439 µm. Additionally, when measured at a vertical distance of 8500 mm above the gas inlet, the absorption atmosphere had an extinction coefficient of 0.0038 m⁻¹, a droplet average diameter D₃₂ of 280 µm, and a droplet size distribution of D₁₀ of 159 µm, D₅₀ of 345 µm, and D₉₀ of 511 µm.

### Example 6

Example 2 was repeated, except that the spraying liquid input pressures at the spraying liquid inlets of spraying devices 3a(b), 3c(d), and 3e(f) were 0.098 MPaG, 0.103 MPaG, and 0.108 MPaG, respectively, the spraying liquid ejection pressure was respectively 0.04 MPaG, and the nozzle outlet diameter of the spraying device was 12.3 mm. At the initial period of the operation of the device, the residual ammonia concentration in the tail gas at the reaction outlet was 132 ppm. After 24 months of operation, the residual ammonia concentration in the tail gas at the reaction outlet was 181 ppm.

In this Example, when measured at a vertical distance of 3000 mm above the gas inlet, the absorption atmosphere had an extinction coefficient of 0.0042 m⁻¹, a droplet average diameter D₃₂ of 2426 µm, and a droplet size distribution of D₁₀ of 1398 µm, D₅₀ of 2434 µm, and D₉₀ of 3390 µm. Additionally, when measured at a vertical distance of 8500 mm above the gas inlet, the absorption atmosphere had an extinction coefficient of 0.0012 m⁻¹, a droplet average diameter D₃₂ of 692 µm, and a droplet size distribution of D₁₀ of 547 µm, D₅₀ of 682 µm, and D₉₀ of 950 µm.

### Example 7

Example 2 was repeated, except that the vertical spacing between two adjacent spraying devices was 1200 mm, and the distance between the ends of two adjacent third spraying pipes as shown in Fig.6B was 707 mm. The nozzle outlet diameter of the spraying device was 11.8 mm, and the spraying liquid ejection rate per nozzle was 5.8 t/h. At the initial period of the operation of the device, the residual ammonia concentration in the tail gas at the reaction outlet was 68 ppm. After 24 months of operation, the residual ammonia concentration in the tail gas at the reaction outlet was 96 ppm.

In this Example, when measured at a vertical distance of 3000 mm above the gas inlet, the absorption atmosphere had an extinction coefficient of 0.005 m⁻¹, a droplet average diameter D₃₂ of 1623 µm, and a droplet size distribution of D₁₀ of 1189 µm, D₅₀ of 2148 µm, and D₉₀ of 2415 µm. Additionally, when measured at a vertical distance of 8500 mm above the gas inlet, the absorption atmosphere had an extinction coefficient of 0.0021 m⁻¹, a droplet average diameter D₃₂ of 432 µm, and a droplet size distribution of D₁₀ of 387 µm, D₅₀ of 601 µm, and D₉₀ of 914 µm.

### Example 8

Example 2 was repeated, except that the vertical spacing between two adjacent spraying devices was 1200 mm, each spraying device had 18 second spraying pipes, the second spraying pipes were equipped with 7 to 20 third spraying pipes, the spacing of the second spraying pipes of the spraying device was 670 mm, the second spraying pipes had an inner diameter of 80 mm, and the distance between the ends of two adjacent third spraying pipes as shown in Fig.6A was 335 mm. The spraying device had a total of 2000 nozzles. The nozzle outlet diameter of the spraying device was 11.3 mm, the nozzle rotating chamber diameter was 30 mm, and the spray angle was 65° . The spraying liquid ejection rate per nozzle was 2.64 t/h. At the initial period of the operation of the device, the residual ammonia concentration in the tail gas at the reaction outlet was 86 ppm. After 24 months of operation, the residual ammonia concentration in the tail gas at the reaction outlet was 105 ppm.

In this Example, when measured at a vertical distance of 3000 mm above the gas inlet, the absorption atmosphere had an extinction coefficient of 0.0078 m⁻¹, a droplet average diameter D₃₂ of 1814 µm, and a droplet size distribution of D₁₀ of 1075 µm, D₅₀ of 2184 µm, and D₉₀ of 2851 µm. Additionally, when measured at a vertical distance of 8500 mm above the gas inlet, the absorption atmosphere had an extinction coefficient of 0.0015 m⁻¹, a droplet average diameter D₃₂ of 460 µm, and a droplet size distribution of D₁₀ of 437 µm, D₅₀ of 651 µm, and D₉₀ of 893 µm.

### Example 9

Example 2 was repeated, except that the spraying liquid input pressures at the spraying liquid inlets of spraying devices 3a(b), 3c(d), and 3e(f) were 0.376 MPaG, 0.380 MPaG, and 0.385 MPaG, respectively; the spraying liquid ejection pressure was respectively 0.045 MPaG, the vertical spacing between two adjacent spraying devices was 550 mm, and the distance between the ends of two adjacent third spraying pipes as shown in Fig.6B was 707 mm. At the initial period of the operation of the device, the residual ammonia concentration in the tail gas at the reaction outlet was 120 ppm. After 24 months of operation, the residual ammonia concentration in the tail gas at the reaction outlet was 162 ppm.

In this Example, when measured at a vertical distance of 3000 mm above the gas inlet, the absorption atmosphere had an extinction coefficient of 0.0042 m⁻¹, a droplet average diameter D₃₂ of 2154 µm, and a droplet size distribution of D₁₀ of 1096 µm, D₅₀ of 2628 µm, and D₉₀ of 2865 µm. Additionally, when measured at a vertical distance of 8500 mm above the gas inlet, the absorption atmosphere had an extinction coefficient of 0.0011 m⁻¹, a droplet average diameter D₃₂ of 367 µm, and a droplet size distribution of D₁₀ of 316 µm, D₅₀ of 484 µm, and D₉₀ of 616 µm.

### Example 10

Example 2 was repeated, except that the vertical spacing between two adjacent spraying devices was 1200 mm, each spraying device had 24 second spraying pipes, the second spraying pipes were equipped with 9 to 24 third spraying pipes, the spacing of the second spraying pipes of the spraying device was 580 mm, the second spraying pipes had an inner diameter of 80 mm, and the distance between the ends of two adjacent third spraying pipes as shown in Fig.6A was 290 mm. The spraying device had a total of 2640 nozzles. The nozzle outlet diameter of the spraying device was 9.1 mm, the nozzle rotating chamber diameter was 30 mm, and the spray angle was 65° . The spraying liquid ejection rate per nozzle was 2.0 t/h. At the initial period of the operation of the device, the residual ammonia concentration in the tail gas at the reaction outlet was 146 ppm. After 24 months of operation, the residual ammonia concentration in the tail gas at the reaction outlet was 185 ppm.

In this Example, when measured at a vertical distance of 3000 mm above the gas inlet, the absorption atmosphere had an extinction coefficient of 0.0059 m⁻¹, a droplet average diameter D₃₂ of 1934 µm, and a droplet size distribution of D₁₀ of 1738 µm, D₅₀ of 2128 µm, and D₉₀ of 2665 µm. Additionally, when measured at a vertical distance of 8500 mm above the gas inlet, the absorption atmosphere had an extinction coefficient of 0.0013 m⁻¹, a droplet average diameter D₃₂ of 347 µm, and a droplet size distribution of D₁₀ of 284 µm, D₅₀ of 482 µm, and D₉₀ of 615 µm.

### Example 11

Example 2 was repeated, except that the spraying liquid ejection rate per nozzle was 8.5 t/h, and the weight ratio of the spraying liquid to the reaction product gas fed through the gas inlet was 32. After 1 month of operation, the residual ammonia concentration in the tail gas at the reaction outlet was 85 ppm. After 24 months of operation, the residual ammonia concentration in the tail gas at the reaction outlet was 99 ppm. The ratio of acid consumption after 24 months of operation / acid consumption after 1 month of operation was 1.03.

In this Example, when measured at a vertical distance of 3000 mm above the gas inlet, the absorption atmosphere had an extinction coefficient of 0.0016 m⁻¹, a droplet average diameter D₃₂ of 1712 µm, and a droplet size distribution of D₁₀ of 1138 µm, D₅₀ of 2324 µm, and D₉₀ of 2765 µm. Additionally, when measured at a vertical distance of 8500 mm above the gas inlet, the absorption atmosphere had an extinction coefficient of 0.0014 m⁻¹, a droplet average diameter D₃₂ of 787 µm, and a droplet size distribution of D₁₀ of 556 µm, D₅₀ of 832 µm, and D₉₀ of 1042 µm.

### Example 12

Example 2 was repeated, except that the spraying liquid ejection rate per nozzle was 1.5 t/h, and the weight ratio of the spraying liquid to the reaction product gas fed through the gas inlet was 11. After 1 month of operation, the residual ammonia concentration in the tail gas at the reaction outlet was 145 ppm. After 24 months of operation, the residual ammonia concentration in the tail gas at the reaction outlet was 178 ppm. The ratio of acid consumption after 24 months of operation / acid consumption after 1 month of operation was 1.05.

In this Example, when measured at a vertical distance of 3000 mm above the gas inlet, the absorption atmosphere had an extinction coefficient of 0.005 m⁻¹, a droplet average diameter D₃₂ of 469 µm, and a droplet size distribution of D₁₀ of 409 µm, D₅₀ of 772 µm, and D₉₀ of 1091 µm. Additionally, when measured at a vertical distance of 8500 mm above the gas inlet, the absorption atmosphere had an extinction coefficient of 0.0012 m⁻¹, a droplet average diameter D₃₂ of 348 µm, and a droplet size distribution of D₁₀ of 159 µm, D₅₀ of 393 µm, and D₉₀ of 604 µm.

### Example 13

Example 2 was repeated, except that the inlets of spraying devices 3a-3f were arranged at different orientations of the equipment; wherein the first spraying pipes of the spraying devices 3a-3f coincided in the projection on the cross-section, but the second spraying pipes, third spraying pipes, and nozzles did not coincide in the projection on the cross-section. After 1 month of operation, the residual ammonia concentration in the tail gas at the reaction outlet was 137 ppm. After 24 months of operation, the residual ammonia concentration in the tail gas at the reaction outlet was 148 ppm.

In this Example, when measured at a vertical distance of 3000 mm above the gas inlet, the absorption atmosphere had an extinction coefficient of 0.0063 m⁻¹, a droplet average diameter D₃₂ of 1852 µm, and a droplet size distribution of D₁₀ of 1593 µm, D₅₀ of 1882 µm, and D₉₀ of 2191 µm. Additionally, when measured at a vertical distance of 8500 mm above the gas inlet, the absorption atmosphere had an extinction coefficient of 0.001 m⁻¹, a droplet average diameter D₃₂ of 430 µm, and a droplet size distribution of D₁₀ of 392 µm, D₅₀ of 575 µm, and D₉₀ of 783 µm.

### Example 14

Example 2 was repeated, except that along the fluid direction, the nozzle diameter on the 1st to 11th second spraying pipes of the first spraying pipe was 36 mm, and the nozzle diameter on the 12th to 14th second spraying pipes of the first spraying pipe was 32 mm. After 1 month of operation, the residual ammonia concentration in the tail gas at the reaction outlet was 63 ppm. After 24 months of operation, the residual ammonia concentration in the tail gas at the reaction outlet was 99 ppm.

In this Example, when measured at a vertical distance of 3000 mm above the gas inlet, the absorption atmosphere had an extinction coefficient of 0.0127 m⁻¹, a droplet average diameter D₃₂ of 824 µm, and a droplet size distribution of D₁₀ of 598 µm, D₅₀ of 1198 µm, and D₉₀ of 1976 µm. Additionally, when measured at a vertical distance of 8500 mm above the gas inlet, the absorption atmosphere had an extinction coefficient of 0.0018 m⁻¹, a droplet average diameter D₃₂ of 411 µm, and a droplet size distribution of D₁₀ of 375 µm, D₅₀ of 586 µm, and D₉₀ of 880 µm.

### Example 15

Example 2 was repeated, except that the vertical spacing between two adjacent spraying devices was 1250 mm. At the initial period of the operation of the device, the residual ammonia concentration in the tail gas at the reaction outlet was 77 ppm. After 24 months of operation, the residual ammonia concentration in the tail gas at the reaction outlet was 85 ppm. The ratio of acid consumption after 24 months of operation / acid consumption after 1 month of operation was 1.04.

In this Example, when measured at a vertical distance of 3000 mm above the gas inlet, the absorption atmosphere had an extinction coefficient of 0.0094 m⁻¹, a droplet average diameter D₃₂ of 1408 µm, and a droplet size distribution of D₁₀ of 1009 µm, D₅₀ of 2083 µm, and D₉₀ of 2362 µm. Additionally, when measured at a vertical distance of 8500 mm above the gas inlet, the absorption atmosphere had an extinction coefficient of 0.0016 m⁻¹, a droplet average diameter D₃₂ of 469 µm, and a droplet size distribution of D₁₀ of 372 µm, D₅₀ of 579 µm, and D₉₀ of 880 µm.

### Example 16

Example 2 was repeated, except that the vertical spacing between two adjacent spraying devices was 720 mm. At the initial period of the operation of the device, the residual ammonia concentration in the tail gas at the reaction outlet was 111 ppm. After 24 months of operation, the residual ammonia concentration in the tail gas at the reaction outlet was 129 ppm. The ratio of acid consumption after 24 months of operation / acid consumption after 1 month of operation was 1.07.

In this Example, when measured at a vertical distance of 3000 mm above the gas inlet, the absorption atmosphere had an extinction coefficient of 0.0143 m⁻¹, a droplet average diameter D₃₂ of 935 µm, and a droplet size distribution of D₁₀ of 616 µm, D₅₀ of 1323 µm, and D₉₀ of 1950 µm. Additionally, when measured at a vertical distance of 8500 mm above the gas inlet, the absorption atmosphere had an extinction coefficient of 0.0015 m⁻¹, a droplet average diameter D₃₂ of 420 µm, and a droplet size distribution of D₁₀ of 389 µm, D₅₀ of 480 µm, and D₉₀ of 632 µm.

### Example 17

Example 2 was repeated, except that the vertical spacing between two adjacent spraying devices was 1650 mm. At the initial period of the operation of the device, the residual ammonia concentration in the tail gas at the reaction outlet was 177 ppm. After 24 months of operation, the residual ammonia concentration in the tail gas at the reaction outlet was 195 ppm. The ratio of acid consumption after 24 months of operation / acid consumption after 1 month of operation was 1.05.

In this Example, when measured at a vertical distance of 3000 mm above the gas inlet, the absorption atmosphere had an extinction coefficient of 0.0053 m⁻¹, a droplet average diameter D₃₂ of 2215 µm, and a droplet size distribution of D₁₀ of 1295 µm, D₅₀ of 2489 µm, and D₉₀ of 3125 µm. Additionally, when measured at a vertical distance of 10350 mm above the gas inlet (located above the spraying devices), the absorption atmosphere had an extinction coefficient of 0.0011 m⁻¹, a droplet average diameter D₃₂ of 580 µm, and a droplet size distribution of D₁₀ of 319 µm, D₅₀ of 645 µm, and D₉₀ of 711 µm.

### Example 18

Example 2 was repeated, except that the vertical spacing between two adjacent spraying devices was 550 mm. After 1 month of operation of the device, the residual ammonia concentration in the tail gas at the reaction outlet was 129 ppm. After 24 months of operation of the device, the residual ammonia concentration in the tail gas at the reaction outlet was 145 ppm. The ratio of acid consumption after 24 months of operation / acid consumption after 1 month of operation was 1.04.

In this Example, when measured at a vertical distance of 3000 mm above the gas inlet, the absorption atmosphere had an extinction coefficient of 0.0187 m⁻¹, a droplet average diameter D₃₂ of 895 µm, and a droplet size distribution of D₁₀ of 566 µm, D₅₀ of 1129 µm, and D₉₀ of 1921 µm. Additionally, when measured at a vertical distance of 8500 mm above the gas inlet, the absorption atmosphere had an extinction coefficient of 0.0011 m⁻¹, a droplet average diameter D₃₂ of 350 µm, and a droplet size distribution of D₁₀ of 219 µm, D₅₀ of 445 µm, and D₉₀ of 511 µm.

### Example 19

Example 2 was repeated, except that the spraying liquid input pressures at the spraying liquid inlets of spraying devices 3a(b), 3c(d), and 3e(f) were 0.405 MPaG, 0.421 MPaG, and 0.435 MPaG, respectively. At the initial period of the operation of the device, the residual ammonia concentration in the tail gas at the reaction outlet was 65 ppm. After 24 months of operation, the residual ammonia concentration in the tail gas at the reaction outlet was 89 ppm.

In this Example, when measured at a vertical distance of 3000 mm above the gas inlet, the absorption atmosphere had an extinction coefficient of 0.0135 m⁻¹, a droplet average diameter D₃₂ of 992 µm, and a droplet size distribution of D₁₀ of 735 µm, D₅₀ of 1112 µm, and D₉₀ of 1601 µm. Additionally, when measured at a vertical distance of 8500 mm above the gas inlet, the absorption atmosphere had an extinction coefficient of 0.0025 m⁻¹, a droplet average diameter D₃₂ of 402 µm, and a droplet size distribution of D₁₀ of 366 µm, D₅₀ of 580 µm, and D₉₀ of 808 µm.

### Example 20

Example 2 was repeated, except that the spraying liquid input pressures at the spraying liquid inlets of spraying devices 3a(b), 3c(d), and 3e(f) were 0.327 MPaG, 0.352 MPaG, and 0.376 MPaG, respectively. At the initial period of the operation of the device, the residual ammonia concentration in the tail gas at the reaction outlet was 112 ppm. After 24 months of operation, the residual ammonia concentration in the tail gas at the reaction outlet was 145 ppm.

In this Example, when measured at a vertical distance of 3000 mm above the gas inlet, the absorption atmosphere had an extinction coefficient of 0.0094 m⁻¹, a droplet average diameter D₃₂ of 1432 µm, and a droplet size distribution of D₁₀ of 1032 µm, D₅₀ of 1789 µm, and D₉₀ of 2647 µm. Additionally, when measured at a vertical distance of 8500 mm above the gas inlet, the absorption atmosphere had an extinction coefficient of 0.0012 m⁻¹, a droplet average diameter D₃₂ of 497 µm, and a droplet size distribution of D₁₀ of 452 µm, D₅₀ of 620 µm, and D₉₀ of 913 µm.

### Example 21

Example 1 was repeated, except that the vertical distance from the gas inlet to the spraying device 3f was 6000 mm. At the initial period of the operation of the device, the residual ammonia concentration in the tail gas at the reaction outlet was 77 ppm. After 24 months of operation, the residual ammonia concentration in the tail gas at the reaction outlet was 85 ppm.

In this Example, when measured at a vertical distance of 3000 mm above the gas inlet, the absorption atmosphere had an extinction coefficient of 0.0093 m⁻¹, a droplet average diameter D₃₂ of 1132 µm, and a droplet size distribution of D₁₀ of 932 µm, D₅₀ of 1248 µm, and D₉₀ of 2101 µm. Additionally, when measured at a vertical distance of 13500 mm above the gas inlet (located above the spraying devices), the absorption atmosphere had an extinction coefficient of 0.0016 m⁻¹, a droplet average diameter D₃₂ of 372 µm, and a droplet size distribution of D₁₀ of 416 µm, D₅₀ of 491 µm, and D₉₀ of 638 µm.

### Example 22

Example 2 was repeated, except that the vertical distance from the gas inlet to the spraying device 3f was 8000 mm. At the initial period of the operation of the device, the residual ammonia concentration in the tail gas at the reaction outlet was 90 ppm. After 24 months of operation, the residual ammonia concentration in the tail gas at the reaction outlet was 106 ppm.

In this Example, when measured at a vertical distance of 3000 mm above the gas inlet, the absorption atmosphere had an extinction coefficient of 0.0062 m⁻¹, a droplet average diameter D₃₂ of 1520 µm, and a droplet size distribution of D₁₀ of 1249 µm, D₅₀ of 1742 µm, and D₉₀ of 2345 µm. Additionally, when measured at a vertical distance of 16000 mm above the gas inlet (located above the spraying devices), the absorption atmosphere had an extinction coefficient of 0.0015 m⁻¹, a droplet average diameter D₃₂ of 326 µm, and a droplet size distribution of D₁₀ of 291 µm, D₅₀ of 485 µm, and D₉₀ of 794 µm.

However, due to the increased total height of the column equipment, the equipment investment cost was increased, and at the same time, the maintenance difficulty of the device was also increased.

### Example 23

Example 2 was repeated, except that the vertical distance from the gas inlet to the spraying device 3f was 900 mm. At the initial period of the operation of the device, the residual ammonia concentration in the tail gas at the reaction outlet was 125 ppm. After 24 months of operation, the residual ammonia concentration in the tail gas at the reaction outlet was 142 ppm.

In this Example, when measured at a vertical distance of 3000 mm above the gas inlet, the absorption atmosphere had an extinction coefficient of 0.0055 m⁻¹, a droplet average diameter D₃₂ of 1220 µm, and a droplet size distribution of D₁₀ of 749 µm, D₅₀ of 1468 µm, and D₉₀ of 2845 µm. Additionally, when measured at a vertical distance of 8500 mm above the gas inlet, the absorption atmosphere had an extinction coefficient of 0.0016 m⁻¹, a droplet average diameter D₃₂ of 486 µm, and a droplet size distribution of D₁₀ of 419 µm, D₅₀ of 685 µm, and D₉₀ of 898 µm.

### Example 24

Example 2 was repeated, except that the vertical distance from the gas inlet to the spraying device 3f was 500 mm. At the initial period of the operation of the device, the residual ammonia concentration in the tail gas at the reaction outlet was 182 ppm. After 24 months of operation, the residual ammonia concentration in the tail gas at the reaction outlet was 219 ppm.

In this Example, when measured at a vertical distance of 3000 mm above the gas inlet, the absorption atmosphere had an extinction coefficient of 0.0043 m⁻¹, a droplet average diameter D₃₂ of 1143 µm, and a droplet size distribution of D₁₀ of 648 µm, D₅₀ of 2163 µm, and D₉₀ of 3556 µm. Additionally, when measured at a vertical distance of 8500 mm above the gas inlet, the absorption atmosphere had an extinction coefficient of 0.0018 m⁻¹, a droplet average diameter D₃₂ of 402 µm, and a droplet size distribution of D₁₀ of 284 µm, D₅₀ of 575 µm, and D₉₀ of 969 µm.

### Example 25

Example 2 was repeated, except that a gas distributor 23 was arranged inside the column, as shown in Fig.4B. The residual ammonia concentration in the tail gas at the reaction outlet was 35 ppm. After adding the gas distribution internal component, the pressure at the bottom of the ammonia absorption column was increased by 10 kPa, causing the reaction pressure of the system preceding the ammonia absorption column to increase by 10 kPa, and the yield of the target product nitrile was decreased by 1.5%.

In this Example, when measured at a vertical distance of 3000 mm above the gas inlet, the absorption atmosphere had an extinction coefficient of 0.0127 m⁻¹, a droplet average diameter D₃₂ of 1068 µm, and a droplet size distribution of D₁₀ of 790 µm, D₅₀ of 1222 µm, and D₉₀ of 1960 µm. Additionally, when measured at a vertical distance of 8500 mm above the gas inlet, the absorption atmosphere had an extinction coefficient of 0.002 m⁻¹, a droplet average diameter D₃₂ of 398 µm, and a droplet size distribution of D₁₀ of 376 µm, D₅₀ of 572 µm, and D₉₀ of 864 µm.

### Example 26

Example 2 was repeated, except that the linear velocity of the reaction gas in the column was 0.6 m/s, and the spraying liquid ejection rate per nozzle was 2.8 t/h. At the initial period of the operation of the device, the residual ammonia concentration in the tail gas at the reaction outlet was 82 ppm. After 24 months of operation, the residual ammonia concentration in the tail gas at the reaction outlet was 99 ppm.

In this Example, when measured at a vertical distance of 3000 mm above the gas inlet, the absorption atmosphere had an extinction coefficient of 0.009 m⁻¹, a droplet average diameter D₃₂ of 1254 µm, and a droplet size distribution of D₁₀ of 895 µm, D₅₀ of 1405 µm, and D₉₀ of 2084 µm. Additionally, when measured at a vertical distance of 8500 mm above the gas inlet, the absorption atmosphere had an extinction coefficient of 0.0016 m⁻¹, a droplet average diameter D₃₂ of 486 µm, and a droplet size distribution of D₁₀ of 385 µm, D₅₀ of 568 µm, and D₉₀ of 880 µm.

### Example 27

Example 2 was repeated, except that the linear velocity of the reaction gas in the column was 1.4 m/s, the spraying liquid ejection rate per nozzle was 5.1 t/h, and the weight ratio of the spraying liquid to the reaction product gas fed through the gas inlet was 17. At the initial period of the operation of the device, the residual ammonia concentration in the tail gas at the reaction outlet was 132 ppm. After 24 months of operation, the residual ammonia concentration in the tail gas at the reaction outlet was 154 ppm.

In this Example, when measured at a vertical distance of 3000 mm above the gas inlet, the absorption atmosphere had an extinction coefficient of 0.0191 m⁻¹, a droplet average diameter D₃₂ of 954 µm, and a droplet size distribution of D₁₀ of 595 µm, D₅₀ of 1389 µm, and D₉₀ of 2052 µm. Additionally, when measured at a vertical distance of 8500 mm above the gas inlet, the absorption atmosphere had an extinction coefficient of 0.0029 m⁻¹, a droplet average diameter D₃₂ of 390 µm, and a droplet size distribution of D₁₀ of 336 µm, D₅₀ of 564 µm, and D₉₀ of 882 µm.

### Example 28

Example 2 was repeated, except that the linear velocity of the reaction gas in the column was 0.4 m/s, and the spraying liquid ejection rate per nozzle was 2.0 t/h. At the initial period of the operation of the device, the residual ammonia concentration in the tail gas at the reaction outlet was 173 ppm. After 24 months of operation, the residual ammonia concentration in the tail gas at the reaction outlet was 195 ppm.

In this Example, when measured at a vertical distance of 3000 mm above the gas inlet, the absorption atmosphere had an extinction coefficient of 0.006 m⁻¹, a droplet average diameter D₃₂ of 1350 µm, and a droplet size distribution of D₁₀ of 985 µm, D₅₀ of 1549 µm, and D₉₀ of 2256 µm. Additionally, when measured at a vertical distance of 8500 mm above the gas inlet, the absorption atmosphere had an extinction coefficient of 0.001 m⁻¹, a droplet average diameter D₃₂ of 416 µm, and a droplet size distribution of D₁₀ of 385 µm, D₅₀ of 581 µm, and D₉₀ of 872 µm.

### Example 29

Example 2 was repeated, except that the linear velocity of the reaction gas in the column was 1.9 m/s, the spraying liquid ejection rate per nozzle was 6.2 t/h, and the weight ratio of the spraying liquid to the reaction product gas fed through the gas inlet was 15.

At the initial period of the operation of the device, the residual ammonia concentration in the tail gas at the reaction outlet was 182 ppm. After 24 months of operation, the residual ammonia concentration in the tail gas at the reaction outlet was 199 ppm.

In this Example, when measured at a vertical distance of 3000 mm above the gas inlet, the absorption atmosphere had an extinction coefficient of 0.02 m⁻¹, a droplet average diameter D₃₂ of 890 µm, and a droplet size distribution of D₁₀ of 522 µm, D₅₀ of 1234 µm, and D₉₀ of 2043 µm. Additionally, when measured at a vertical distance of 8500 mm above the gas inlet, the absorption atmosphere had an extinction coefficient of 0.0039 m⁻¹, a droplet average diameter D₃₂ of 361 µm, and a droplet size distribution of D₁₀ of 306 µm, D₅₀ of 514 µm, and D₉₀ of 847 µm.

### Example 30

Example 2 was repeated, except that the ammonia absorption column used had a single-stage structure as shown in Fig.4A. The fluid directions in the first spraying pipes of spraying devices 3a, 3b, 3c were opposite to those of spraying devices 3d, 3e, 3f, i.e., the projections of the spraying inlets of the upper three layers of spraying devices 3a, 3b, 3c substantially coincided, and the projections of the spraying inlets of the lower three layers of spraying devices 3d, 3e, 3f also substantially coincided, while the projection angle between the spraying inlets of the upper three layers and those of the lower three layers was 180°. After 1 month of operation of the device, the residual ammonia concentration in the tail gas at the reaction outlet was 42 ppm. After 24 months of operation of the device, the residual ammonia concentration in the tail gas at the reaction outlet was 61 ppm. The ratio of acid consumption after 24 months of operation / acid consumption after 1 month of operation was 1.03.

In this Example, when measured at a vertical distance of 3000 mm above the gas inlet, the absorption atmosphere had an extinction coefficient of 0.0118 m⁻¹, a droplet average diameter D₃₂ of 934 µm, and a droplet size distribution of D₁₀ of 698 µm, D₅₀ of 1367 µm, and D₉₀ of 2182 µm. Additionally, when measured at a vertical distance of 8500 mm above the gas inlet, the absorption atmosphere had an extinction coefficient of 0.0019 m⁻¹, a droplet average diameter D₃₂ of 417 µm, and a droplet size distribution of D₁₀ of 392 µm, D₅₀ of 584 µm, and D₉₀ of 898 µm.

### Example 31

Example 2 was repeated, except that the projections of the first spraying pipes of spraying devices 3a, 3c, 3e and those of spraying devices 3b, 3d, 3f coincided on the cross-section, while the projections of the second spraying pipes, of the third spraying pipes, and of the nozzles did not coincide on the cross-section, as shown in Fig.7. After 1 month of operation of the device, the residual ammonia concentration in the tail gas at the reaction outlet was 78 ppm. After 24 months of operation of the device, the residual ammonia concentration in the tail gas at the reaction outlet was 95 ppm. The ratio of acid consumption after 24 months of operation / acid consumption after 1 month of operation was 1.05.

In this Example, when measured at a vertical distance of 3000 mm above the gas inlet, the absorption atmosphere had an extinction coefficient of 0.0103 m⁻¹, a droplet average diameter D₃₂ of 1146 µm, and a droplet size distribution of D₁₀ of 790 µm, D₅₀ of 1742 µm, and D₉₀ of 1956 µm. Additionally, when measured at a vertical distance of 8500 mm above the gas inlet, the absorption atmosphere had an extinction coefficient of 0.002 m⁻¹, a droplet average diameter D₃₂ of 442 µm, and a droplet size distribution of D₁₀ of 401 µm, D₅₀ of 612 µm, and D₉₀ of 934 µm.

### Example 32

Example 2 was repeated, except that on each spraying device, the nozzles on the opposite two sides of 8 second spraying pipes had opposite rotating chamber directions, while the nozzles on the opposite two sides of another 8 second spraying pipes had the same rotating chamber direction. After 1 month of operation of the device, the residual ammonia concentration in the tail gas at the reaction outlet was 90 ppm. After 24 months of operation of the device, the residual ammonia concentration in the tail gas at the reaction outlet was 105 ppm. The ratio of acid consumption after 24 months of operation / acid consumption after 1 month of operation was 1.04.

In this Example, when measured at a vertical distance of 3000 mm above the gas inlet, the absorption atmosphere had an extinction coefficient of 0.0103 m⁻¹, a droplet average diameter D₃₂ of 1231 µm, and a droplet size distribution of D₁₀ of 778 µm, D₅₀ of 1692 µm, and D₉₀ of 1923 µm. Additionally, when measured at a vertical distance of 8500 mm above the gas inlet, the absorption atmosphere had an extinction coefficient of 0.0018 m⁻¹, a droplet average diameter D₃₂ of 449 µm, and a droplet size distribution of D₁₀ of 420 µm, D₅₀ of 643 µm, and D₉₀ of 946 µm.

### Example 33

Example 2 was repeated, except that the projections of the ends of the third spraying pipes of the spraying devices coincided and the projection-coincided nozzles of adjacent spraying devices had opposite rotating directions. After 1 month of operation of the device, the residual ammonia concentration in the tail gas at the reaction outlet was 85 ppm. After 24 months of operation of the device, the residual ammonia concentration in the tail gas at the reaction outlet was 110 ppm. The ratio of acid consumption after 24 months of operation / acid consumption after 1 month of operation was 1.05.

In this Example, when measured at a vertical distance of 3000 mm above the gas inlet, the absorption atmosphere had an extinction coefficient of 0.0100 m⁻¹, a droplet average diameter D₃₂ of 1327 µm, and a droplet size distribution of D₁₀ of 808 µm, D₅₀ of 1700 µm, and D₉₀ of 1906 µm. Additionally, when measured at a vertical distance of 8500 mm above the gas inlet, the absorption atmosphere had an extinction coefficient of 0.0018 m⁻¹, a droplet average diameter D₃₂ of 452 µm, and a droplet size distribution of D₁₀ of 424 µm, D₅₀ of 656 µm, and D₉₀ of 989 µm.

### Example 34

Example 2 was repeated, except that on the spraying device, two adjacent nozzles on the same side of the second spraying pipe had opposite rotating directions, while all nozzles on the extension lines at a same horizontal direction of the second spraying pipe had the same rotating direction. The top view of the spraying device was as shown in Fig.11B and the detailed top view of the spraying device was as shown in Fig.11E. After 1 month of operation of the device, the residual ammonia concentration in the tail gas at the reaction outlet was 106 ppm. After 24 months of operation of the device, the residual ammonia concentration in the tail gas at the reaction outlet was 125 ppm. The ratio of acid consumption after 24 months of operation / acid consumption after 1 month of operation was 1.05.

In this Example, when measured at a vertical distance of 3000 mm above the gas inlet, the absorption atmosphere had an extinction coefficient of 0.0074 m⁻¹, a droplet average diameter D₃₂ of 1291 µm, and a droplet size distribution of D₁₀ of 728 µm, D₅₀ of 1702 µm, and D₉₀ of 2011 µm. Additionally, when measured at a vertical distance of 8500 mm above the gas inlet, the absorption atmosphere had an extinction coefficient of 0.00145 m⁻¹, a droplet average diameter D₃₂ of 519 µm, and a droplet size distribution of D₁₀ of 436 µm, D₅₀ of 672 µm, and D₉₀ of 1046 µm.

### Example 35

Example 2 was repeated, except that all nozzles toward the facing sides of two adjacent second spraying pipes of the spraying device had the same spraying liquid rotating direction, while the nozzles on the two sides of a same second spraying pipe had opposite spraying liquid rotating directions. After 1 month of operation of the device, the residual ammonia concentration in the tail gas at the reaction outlet was 108 ppm. After 24 months of operation of the device, the residual ammonia concentration in the tail gas at the reaction outlet was 121 ppm. The ratio of acid consumption after 24 months of operation / acid consumption after 1 month of operation was 1.04.

In this Example, when measured at a vertical distance of 3000 mm above the gas inlet, the absorption atmosphere had an extinction coefficient of 0.0072 m⁻¹, a droplet average diameter D₃₂ of 1345 µm, and a droplet size distribution of D₁₀ of 723 µm, D₅₀ of 1726 µm, and D₉₀ of 2071 µm. Additionally, when measured at a vertical distance of 8500 mm above the gas inlet, the absorption atmosphere had an extinction coefficient of 0.00143 m⁻¹, a droplet average diameter D₃₂ of 503 µm, and a droplet size distribution of D₁₀ of 438 µm, D₅₀ of 699 µm, and D₉₀ of 1167 µm.

### Example 36

Example 2 was repeated, except that two adjacent nozzles on one side of the second spraying pipe of the spraying device had opposite rotating directions, and the nozzles on the opposite two sides of a same second spraying pipe had opposite rotating directions. After 1 month of operation of the device, the residual ammonia concentration in the tail gas at the reaction outlet was 125 ppm. After 24 months of operation of the device, the residual ammonia concentration in the tail gas at the reaction outlet was 148 ppm. The ratio of acid consumption after 24 months of operation / acid consumption after 1 month of operation was 1.05.

In this Example, when measured at a vertical distance of 3000 mm above the gas inlet, the absorption atmosphere had an extinction coefficient of 0.0064 m⁻¹, a droplet average diameter D₃₂ of 1446 µm, and a droplet size distribution of D₁₀ of 723 µm, D₅₀ of 1825 µm, and D₉₀ of 2270 µm. Additionally, when measured at a vertical distance of 8500 mm above the gas inlet, the absorption atmosphere had an extinction coefficient of 0.00141 m⁻¹, a droplet average diameter D₃₂ of 513 µm, and a droplet size distribution of D₁₀ of 420 µm, D₅₀ of 739 µm, and D₉₀ of 1190 µm.

### Example 37

Example 1 was repeated, except that all nozzles of the spraying device had the same rotating chamber direction. After 1 month of operation of the device, the residual ammonia concentration in the tail gas at the reaction outlet was 129 ppm. After 24 months of operation of the device, the residual ammonia concentration in the tail gas at the reaction outlet was 149 ppm. The ratio of acid consumption after 24 months of operation / acid consumption after 1 month of operation was 1.06.

In this Example, when measured at a vertical distance of 3000 mm above the gas inlet, the absorption atmosphere had an extinction coefficient of 0.0052 m⁻¹, a droplet average diameter D₃₂ of 1586 µm, and a droplet size distribution of D₁₀ of 723 µm, D₅₀ of 1825 µm, and D₉₀ of 2331 µm. Additionally, when measured at a vertical distance of 8500 mm above the gas inlet, the absorption atmosphere had an extinction coefficient of 0.0012 m⁻¹, a droplet average diameter D₃₂ of 545 µm, and a droplet size distribution of D₁₀ of 430 µm, D₅₀ of 780 µm, and D₉₀ of 1254 µm.

### Example 38

Example 2 was repeated, except that the spacing of adjacent third spraying pipes was 300 mm, and the distance between the ends of two adjacent third spraying pipes as shown in Fig.6A was 300 mm. The residual ammonia concentration in the tail gas at the reaction outlet was 76 ppm.

In this Example, when measured at a vertical distance of 3000 mm above the gas inlet, the absorption atmosphere had an extinction coefficient of 0.0051 m⁻¹, a droplet average diameter D₃₂ of 1620 µm, and a droplet size distribution of D₁₀ of 1182 µm, D₅₀ of 2145 µm, and D₉₀ of 2405 µm. Additionally, when measured at a vertical distance of 8500 mm above the gas inlet, the absorption atmosphere had an extinction coefficient of 0.0022 m⁻¹, a droplet average diameter D₃₂ of 430 µm, and a droplet size distribution of D₁₀ of 382 µm, D₅₀ of 604 µm, and D₉₀ of 924 µm.

### Example 39

Example 2 was repeated, except that the distance between the ends of two adjacent third spraying pipes as shown in Fig.6A was 340 mm. The residual ammonia concentration in the tail gas at the reaction outlet was 105 ppm.

In this Example, when measured at a vertical distance of 3000 mm above the gas inlet, the absorption atmosphere had an extinction coefficient of 0.0079 m⁻¹, a droplet average diameter D₃₂ of 1821 µm, and a droplet size distribution of D₁₀ of 1077 µm, D₅₀ of 2180 µm, and D₉₀ of 2855 µm. Additionally, when measured at a vertical distance of 8500 mm above the gas inlet, the absorption atmosphere had an extinction coefficient of 0.00156 m⁻¹, a droplet average diameter D₃₂ of 461 µm, and a droplet size distribution of D₁₀ of 427 µm, D₅₀ of 654 µm, and D₉₀ of 883 µm.

### Example 40

Example 2 was repeated, except that along the fluid direction, the outlet diameter of the nozzles on the 1st to 11th second spraying pipes of the first spraying pipe was 11.7 mm, and the outlet diameter of the nozzles on the 12th to 14th second spraying pipes of the first spraying pipe was 11.9 mm. After 1 month of operation of the device, the residual ammonia concentration in the tail gas at the reaction outlet was 85 ppm. After 24 months of operation of the device, the residual ammonia concentration in the tail gas at the reaction outlet was 99 ppm. The ratio of acid consumption after 24 months of operation / acid consumption after 1 month of operation was 1.03.

In this Example, when measured at a vertical distance of 3000 mm above the gas inlet, the absorption atmosphere had an extinction coefficient of 0.00161 m⁻¹, a droplet average diameter D₃₂ of 1722 µm, and a droplet size distribution of D₁₀ of 1128 µm, D₅₀ of 2310 µm, and D₉₀ of 2785 µm. Additionally, when measured at a vertical distance of 8500 mm above the gas inlet, the absorption atmosphere had an extinction coefficient of 0.0014 m⁻¹, a droplet average diameter D₃₂ of 777 µm, and a droplet size distribution of D₁₀ of 536 µm, D₅₀ of 841 µm, and D₉₀ of 998 µm.

### Comparative Example 1

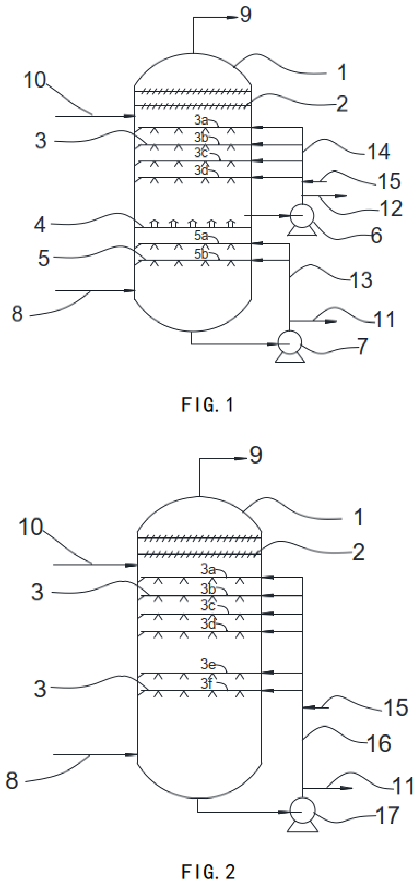

Example 1 was repeated, except that the ammonia absorption column had a two-stage structure as shown in Fig.1. The spraying liquid input pressures at the spraying liquid inlets of spraying devices 3a, 3b, 3c, 3d were 0.04 MPaG, 0.044 MPaG, 0.046 MPaG, and 0.051 MPaG, respectively. The spraying liquid ejection pressure was 0.02 MPaG, and the nozzle outlet diameter was 14.2 mm. At the initial period of the operation of the device, the residual ammonia concentration in the tail gas at the reaction outlet was 400 ppm. After 24 months of operation, the residual ammonia concentration in the tail gas at the reaction outlet was 529 ppm.

In this Comparative Example, when measured at a vertical distance of 3000 mm above the gas inlet, the absorption atmosphere had an extinction coefficient of 0.0033 m⁻¹, a droplet average diameter D₃₂ of 2976 µm, and a droplet size distribution of D₁₀ of 1298 µm, D₅₀ of 3174 µm, and D₉₀ of 3990 µm. Additionally, when measured at a vertical distance of 8500 mm above the gas inlet, the absorption atmosphere had an extinction coefficient of 0.0008 m⁻¹, a droplet average diameter D₃₂ of 742 µm, and a droplet size distribution of D₁₀ of 523 µm, D₅₀ of 882 µm, and D₉₀ of 1050 µm.

### Comparative Example 2

Example 2 was repeated, except that the ammonia absorption column had a single-stage structure as shown in Fig.2. The spraying liquid input pressures at the spraying liquid inlets of spraying devices 3a, 3b, 3c, 3d, 3e, and 3f were 1.202 MPaG, 1.205 MPaG, 1.209 MPaG, 1.214 MPaG, 1.217 MPaG, and 1.220 MPaG, respectively. The spraying liquid ejection pressure was 0.076 MPaG. At the initial period of the operation of the device, the residual ammonia concentration in the tail gas at the reaction outlet was 85 ppm. After 24 months of operation, the residual ammonia concentration in the tail gas at the reaction outlet was 96 ppm. However, 1.5% of ammonium sulfate was detected in the condensate of the tail gas from the ammonia absorption column outlet.

In this Comparative Example, when measured at a vertical distance of 3000 mm above the gas inlet, the absorption atmosphere had an extinction coefficient of 0.0263 m⁻¹, a droplet average diameter D₃₂ of 369 µm, and a droplet size distribution of D₁₀ of 232 µm, D₅₀ of 550 µm, and D₉₀ of 1239 µm. Additionally, when measured at a vertical distance of 8500 mm above the gas inlet, the absorption atmosphere had an extinction coefficient of 0.0052 m⁻¹, a droplet average diameter D₃₂ of 231 µm, and a droplet size distribution of D₁₀ of 149 µm, D₅₀ of 315 µm, and D₉₀ of 436 µm.

### Comparative Example 3

Example 1 was repeated, except that the spraying inlets 18 of spraying devices 3a, 3c and 3b, 3d were on a same side of the ammonia absorption column, i.e., the fluid directions in the first spraying pipes were the same, and the projections of the spraying inlets of spraying devices 3a, 3b, 3c, and 3d substantially coincided (as shown in Fig.1), and the projections of the nozzles at the ends of the third spraying pipes of spraying devices 3a, 3c and those of spraying devices 3b, 3d coincided on the cross-section (as shown in Fig.5). After 1 month of operation of the device, the residual ammonia concentration in the tail gas at the reaction outlet was 85 ppm. After 24 months of operation of the device, the residual ammonia concentration in the tail gas at the reaction outlet was 253 ppm. The ratio of acid consumption after 24 months of operation / acid consumption after 1 month of operation was 1.13.

In this Comparative Example, when measured at a vertical distance of 3000 mm above the gas inlet, the absorption atmosphere had an extinction coefficient of 0.0038 m⁻¹, a droplet average diameter D₃₂ of 1386 µm, and a droplet size distribution of D₁₀ of 523 µm, D₅₀ of 1725 µm, and D₉₀ of 2831 µm. Additionally, when measured at a vertical distance of 8500 mm above the gas inlet, the absorption atmosphere had an extinction coefficient of 0.0008 m⁻¹, a droplet average diameter D₃₂ of 545 µm, and a droplet size distribution of D₁₀ of 130 µm, D₅₀ of 680 µm, and D₉₀ of 1454 µm.

### Comparative Example 4

Example 2 was repeated, except that the spraying inlets 18 of spraying devices 3a, 3c, 3e and those of spraying devices 3b, 3d, 3f were on a same side of the ammonia absorption column, i.e., the fluid directions in the first spraying pipes were the same, and the projections of the spraying inlets of spraying devices 3a, 3b, 3c, 3d, 3e, 3f substantially coincided (as shown in Fig.2), and the projections of the nozzles at the ends of the third spraying pipes of spraying devices 3a, 3c and those of spraying devices 3b, 3d coincided on the cross-section (as shown in Fig.5). After 1 month of operation of the device, the residual ammonia concentration in the tail gas at the reaction outlet was 73 ppm. After 24 months of operation of the device, the residual ammonia concentration in the tail gas at the reaction outlet was 223 ppm. The ratio of acid consumption after 24 months of operation / acid consumption after 1 month of operation was 1.13.

In this Comparative Example, when measured at a vertical distance of 3000 mm above the gas inlet, the absorption atmosphere had an extinction coefficient of 0.0039 m⁻¹, a droplet average diameter D₃₂ of 1356 µm, and a droplet size distribution of D₁₀ of 521 µm, D₅₀ of 1856 µm, and D₉₀ of 2913 µm. Additionally, when measured at a vertical distance of 8500 mm above the gas inlet, the absorption atmosphere had an extinction coefficient of 0.0008 m⁻¹, a droplet average diameter D₃₂ of 536 µm, and a droplet size distribution of D₁₀ of 137 µm, D₅₀ of 649 µm, and D₉₀ of 1450 µm.

### Comparative Example 5

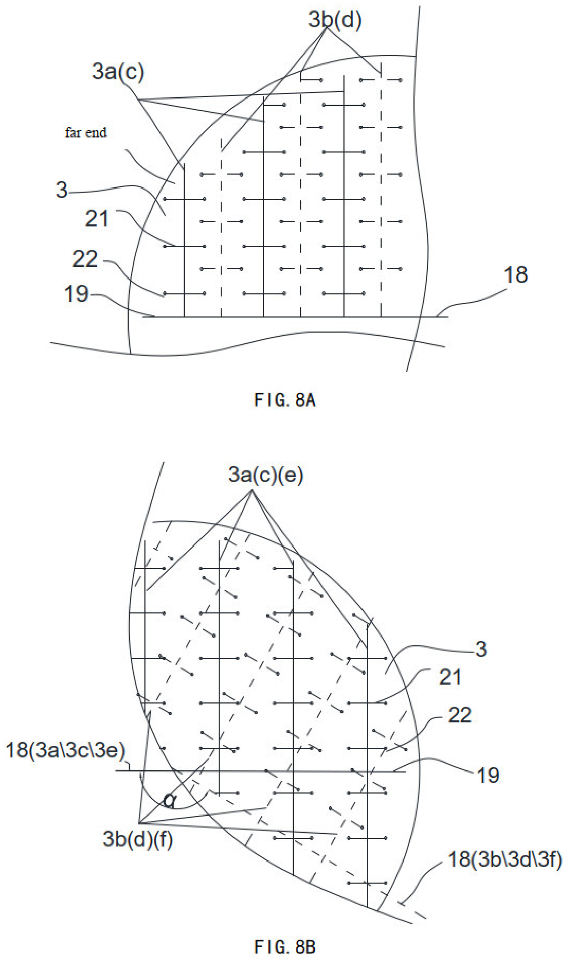

Example 2 was repeated, except that the projection angle of the spraying inlets 18 of spraying devices 3a, 3c, 3e and those of spraying devices 3b, 3d, 3f on the cross-section was 30°, i.e., the fluid directions of the corresponding first spraying pipes of the spraying devices were at 30°, such that the projections of the ends of the third spraying pipes of the spraying devices did not coincide, as shown in Fig.8B. After 1 month of operation of the device, the residual ammonia concentration in the tail gas at the reaction outlet was 130 ppm. After 24 months of operation of the device, the residual ammonia concentration in the tail gas at the reaction outlet was 343 ppm. The ratio of acid consumption after 24 months of operation / acid consumption after 1 month of operation was 1.15.

In this Comparative Example, when measured at a vertical distance of 3000 mm above the gas inlet, the absorption atmosphere had an extinction coefficient of 0.0034 m⁻¹, a droplet average diameter D₃₂ of 1672 µm, and a droplet size distribution of D₁₀ of 540 µm, D₅₀ of 1738 µm, and D₉₀ of 3213 µm. Additionally, when measured at a vertical distance of 8500 mm above the gas inlet, the absorption atmosphere had an extinction coefficient of 0.0008 m⁻¹, a droplet average diameter D₃₂ of 436 µm, and a droplet size distribution of D₁₀ of 189 µm, D₅₀ of 649 µm, and D₉₀ of 1550 µm.

### Comparative Example 6

Example 2 was repeated, except that the projection angle of the spraying inlets 18 of spraying devices 3a, 3c, 3e and those of spraying devices 3b, 3d, 3f on the cross-section was 90°, i.e., the fluid directions of the corresponding first spraying pipes of the spraying devices were at 90°, such that the projections of the ends of the third spraying pipes of the spraying devices did not coincide. After 1 month of operation of the device, the residual ammonia concentration in the tail gas at the reaction outlet was 110 ppm. After 24 months of operation of the device, the residual ammonia concentration in the tail gas at the reaction outlet was 293 ppm. The ratio of acid consumption after 24 months of operation / acid consumption after 1 month of operation was 1.10.

In this Comparative Example, when measured at a vertical distance of 3000 mm above the gas inlet, the absorption atmosphere had an extinction coefficient of 0.0035 m⁻¹, a droplet average diameter D₃₂ of 1582 µm, and a droplet size distribution of D₁₀ of 640 µm, D₅₀ of 1714 µm, and D₉₀ of 3138 µm. Additionally, when measured at a vertical distance of 8500 mm above the gas inlet, the absorption atmosphere had an extinction coefficient of 0.0009 m⁻¹, a droplet average diameter D₃₂ of 461 µm, and a droplet size distribution of D₁₀ of 259 µm, D₅₀ of 618 µm, and D₉₀ of 1489 µm.

### Comparative Example 7

Example 2 was repeated, except that the projection angle of the spraying inlets 18 of spraying devices 3a, 3c, 3e and those of spraying devices 3b, 3d, 3f on the cross-section was 120°, i.e., the fluid directions of the corresponding first spraying pipes of the spraying devices were at 90°, such that the projections of the ends of the third spraying pipes of the spraying devices did not coincide, as shown in Fig.8B. After 1 month of operation of the device, the residual ammonia concentration in the tail gas at the reaction outlet was 132 ppm. After 24 months of operation of the device, the residual ammonia concentration in the tail gas at the reaction outlet was 353 ppm. The ratio of acid consumption after 24 months of operation / acid consumption after 1 month of operation was 1.15.

In this Comparative Example, when measured at a vertical distance of 3000 mm above the gas inlet, the absorption atmosphere had an extinction coefficient of 0.0032 m⁻¹, a droplet average diameter D₃₂ of 2522 µm, and a droplet size distribution of D₁₀ of 678 µm, D₅₀ of 2924 µm, and D₉₀ of 3738 µm. Additionally, when measured at a vertical distance of 8500 mm above the gas inlet, the absorption atmosphere had an extinction coefficient of 0.0006 m⁻¹, a droplet average diameter D₃₂ of 491 µm, and a droplet size distribution of D₁₀ of 259 µm, D₅₀ of 876 µm, and D₉₀ of 1573 µm.

## Claims

1. A process for producing a nitrile, comprising a step of subjecting a hydrocarbon feedstock to an ammoxidation reaction to produce a reaction product containing nitrile (called as reaction step), and a step of feeding the reaction product into an absorption device through a gas inlet and spraying a spraying liquid onto the reaction product via a spraying device within the absorption device to cool the reaction product and form an absorption atmosphere (called as cooling step), wherein when measured at a vertical distance of 3000 mm above the gas inlet, the absorption atmosphere has an extinction coefficient of 0.004-0.02 m⁻¹ (preferably 0.006-0.018 m⁻¹).

2. The producing process according to claim 1, wherein when measured at a vertical distance of 3000 mm above the gas inlet, the absorption atmosphere has a droplet average diameter, D₃₂, of 400-2600 µm (preferably 600-2400 µm), and/or, when measured at a vertical distance of 3000 mm above the gas inlet, the absorption atmosphere has a droplet size distribution, D₁₀ of 150-1500 µm, D₅₀ of 700-3000 µm, and D₉₀ of 1400-3600 µm (preferably D₁₀ of 250-1400 µm, D₅₀ of 800-2800 µm, and D₉₀ of 1600-3500 µm).

3. The producing process according to claim 1, wherein when measured at a vertical distance of 8500 mm above the gas inlet, the absorption atmosphere has an extinction coefficient of 0.001-0.004 m⁻¹ (preferably 0.0015-0.0035 m⁻¹), and/or, when measured at a vertical distance of 8500 mm above the gas inlet, the absorption atmosphere has a droplet average diameter D₃₂ of 200-1400 µm (preferably 400-1000 µm), and/or, when measured at a vertical distance of 8500 mm above the gas inlet, the absorption atmosphere has a droplet size distribution of D₁₀ of 100-1000 µm, D₅₀ of 300-1800 µm, and D₉₀ of 500-2200 µm (preferably D₁₀ of 200-600 µm, D₅₀ of 400-1400 µm, and D₉₀ of 600-1800 µm).

4. The producing process according to claim 1, wherein the spraying device comprises a spraying liquid inlet, a first spraying pipe in fluid communication with the spraying liquid inlet, a plurality of second spraying pipes in fluid communication with the first spraying pipe and extending perpendicularly to the first spraying pipe along both sides thereof, a plurality of third spraying pipes in fluid communication with the second spraying pipes and extending perpendicularly to the second spraying pipes along both sides thereof, and a nozzle located at the end of the third spraying pipe and in fluid communication therewith.

5. The producing process according to claim 4, wherein, on two adjacent second spraying pipes, the linear distance M between the end of any one third spraying pipe on one second spraying pipe and the end of any one third spraying pipe on any other adjacent second spraying pipe is not less than 320 mm (preferably not less than 350 mm), and/or, the nozzle is same as or different from each other and each independently have a spraying liquid ejection rate of 0.5-7.5 t/h (preferably 0.9-6.5 t/h), and/or, the nozzle is same as or different from each other and each independently have a spraying liquid ejection pressure at the nozzle outlet of 0.03-0.85 MPaG (preferably 0.04-0.65 MPaG), and/or, the spraying liquid input pressure at the spraying liquid inlet is controlled to be 0.06-1.00 MPaG (preferably 0.12-0.90 MPaG, more preferably 0.18-0.80 MPaG), and/or, the difference (absolute value) in the spraying liquid input pressures between the spraying liquid inlets of any two spraying devices is less than 0.024 MPa (preferably less than 0.018 MPa, more preferably less than 0.012 MPa).

6. The producing process according to claim 1, wherein a plurality (e.g., 2-10, preferably 4-8) of the spraying devices are arranged in layers inside the absorption device along the central axis direction of the absorption device with a predetermined vertical spacing, and/or, the vertical spacing between two adjacent spraying devices (calculated as the vertical spacing of the spraying liquid inlets of the spraying devices) is 650-1350 mm (preferably 750-1200 mm).

7. The producing process according to claim 4, wherein when a cross-section is obtained by cutting the absorption device at a direction perpendicular to the central axis of the absorption device, at least one (preferably all) selected from the first spraying pipe, the second spraying pipe, and the third spraying pipe of one of the plurality of spraying devices and at least one (preferably all) selected from the first spraying pipe, the second spraying pipe, and the third spraying pipe of any other of the plurality of spraying devices substantially coincide in the projection on the cross-section.

8. The producing process according to claim 7, wherein all nozzles of the one spraying device and all nozzles of the any other spraying device substantially coincide in the projection on the cross-section, and/or, two nozzles with substantially coinciding projections have the same spray diameter, and/or, two nozzles with substantially coinciding projections have the same spraying liquid rotating direction.

9. The producing process according to claim 1, wherein the vertical distance between the gas inlet and the spraying liquid inlet of the spraying device (when more than one spraying device are present, referring to the spraying device closest to the gas inlet) is 800-6000 mm (preferably 1000-5000 mm), and/or, the gas inlet has an inner diameter of 800-1900 mm (preferably 900-1700 mm), and/or, the reaction product has a linear velocity within the absorption device of 0.6-1.5 m/s (preferably 0.7-1.3 m/s), and/or, the flow ratio by weight of the spraying liquid to the reaction product is 15-25:1.

10. The producing process according to claim 1, wherein within the internal space between the gas inlet and the spraying device (when more than one spraying device are present, referring to the spraying device closest to the gas inlet) of the absorption device, no mechanical member capable of substantially affecting the gas flow is arranged.

11. The producing process according to claim 7, wherein the angle between the projections on the cross-section of the spraying liquid inlet of the one spraying device and that of the any other spraying device is 180°.

12. The absorption device according to claim 11, wherein among all the spraying devices, the angle between the projections on the cross-section of the spraying liquid inlets of any two odd-numbered spraying devices is 0°, the angle between the projections on the cross-section of the spraying liquid inlets of any two even-numbered spraying devices is 0°, and the angle between the projection on the cross-section of the spraying liquid inlet of any odd-numbered spraying device and that of the spraying liquid inlet of any even-numbered spraying device is 180°.

13. The absorption device according to claim 11, wherein the nozzle comprises a nozzle inlet, a rotating chamber, and a nozzle outlet, wherein the rotating chamber is configured such that the spraying liquid fed in through the nozzle inlet leaves the nozzle outlet in a rotating manner after passing through the rotating chamber.

14. The absorption device according to claim 11, wherein on at least one (preferably all) of the second spraying pipes, two adjacent (preferably all) nozzles located at the same side of the second spraying pipe are configured such that the spraying liquid is ejected out with the same rotating direction.

15. The absorption device according to claim 14, wherein all nozzles located at the facing sides of two side-by-side adjacent second spraying pipes are configured such that the spraying liquid is ejected out with opposite rotating direction.

16. The absorption device according to claim 14, wherein on at least one (preferably all) of the second spraying pipes, at least one (preferably all) nozzle located on one side of the second spraying pipe is configured such that the spraying liquid is ejected out with a rotating direction A, while at least one (preferably all) nozzle located on the opposite side of the second spraying pipe is configured such that the spraying liquid is ejected out with a rotating direction B, wherein the rotating direction A is opposite to the rotating direction B.

17. The absorption device according to claim 16, wherein among all the nozzles of the spraying device, the number of nozzles ejecting the spraying liquid with the rotating direction A is equal or substantially equal to the number of nozzles ejecting the spraying liquid with the rotating direction B.
